# EUROPEAN PATENT APPLICATION

(11) **EP 4 601 315 A1**
(43) Date of publication of application: **13.08.2025**
(21) Application number: 23874532.7
(22) Date of filing: 10.08.2023
(51) Int. Cl.: H04N 25/771, H04N 25/63

(54) **IMAGING DEVICE**

(30) Priority: 07.10.2022 JP 2022162302
(71) Applicant: Sony Semiconductor Solutions Corporation, Atsugi-shi, Kanagawa 243-0014 (JP)
(72) Inventor: HATTORI, Yuki, Atsugi-shi, Kanagawa 243-0014 (JP); YAMAMOTO, Masahiro, Atsugi-shi, Kanagawa 243-0014 (JP)
(74) Representative: Müller Hoffmann & Partner
(86) International application number: PCT/JP2023/029334
(87) International publication number: WO 2024/075399

(57) **Abstract**

To reduce a noise component caused by dark current while eliminating the need for mechanical light shielding.

An imaging device includes a pixel provided with a lateral overflow integration capacitor that accumulates charge overflowing from a photoelectric conversion unit, and a signal processing unit that performs correction processing of a pixel signal read from the pixel on the basis of a virtual light-shielding signal read from the lateral overflow integration capacitor in a state where the charge photoelectrically converted by the photoelectric conversion unit is not accumulated in the lateral overflow integration capacitor. A flow control unit that discharges the charge so that the charge photoelectrically converted by the photoelectric conversion unit is not accumulated in the lateral overflow integration capacitor may be further included.

## Description

### TECHNICAL FIELD

The present technology relates to an imaging device. Specifically, the present technology relates to an imaging device in which a lateral overflow integration capacitor (LOFIC) is provided in a pixel.

### BACKGROUND ART

In order to remove a noise component inherent in the element called dark current at the time of imaging, a technology (referred to as black subtraction) of imaging a light-shielded image under conditions similar to those of normal imaging and subtracting the image from the normal image is used in some cases. For example, a technology has been proposed in which an imaging unit is controlled to acquire a light-shielded image signal immediately before continuous imaging is performed by the imaging unit, and a noise removal method is changed on the basis of an exposure condition and a temperature when the continuous shooting is performed (see, for example, Patent Document 1).

### CITATION LIST

### PATENT DOCUMENT

Patent Document 1: Japanese Patent Application Laid-Open No. 2014-220580

### SUMMARY OF THE INVENTION

### PROBLEMS TO BE SOLVED BY THE INVENTION

However, in the above-described conventional technology, mechanical light shielding such as a mechanical shutter or a light shielding curtain is required in order to acquire the light-shielded image signal, and there is a possibility that it is difficult to apply the technology depending on the application of the imaging device.

The present technology has been made in view of such a situation, and an object thereof is to reduce a noise component caused by dark current while eliminating the need for mechanical light shielding.

### SOLUTIONS TO PROBLEMS

The present technology has been made to solve the above-described problems, and a first aspect thereof is an imaging device including a pixel provided with a lateral overflow integration capacitor that accumulates charge overflowing from a photoelectric conversion unit, and a signal processing unit that performs correction processing of a pixel signal read from the pixel on the basis of a virtual light-shielding signal read from the lateral overflow integration capacitor in a state where the charge photoelectrically converted by the photoelectric conversion unit is not accumulated in the lateral overflow integration capacitor. This brings about an effect that the noise component is removed on the basis of the virtual light-shielding signal caused by the dark current.

Furthermore, in the first aspect, a flow control unit that discharges the charge so that the charge photoelectrically converted by the photoelectric conversion unit is not accumulated in the lateral overflow integration capacitor may be further included. This brings about an effect that a virtual light-shielding signal caused by dark current is generated without shielding the photoelectric conversion unit.

Furthermore, in the first aspect, a normal accumulation period in which charge is accumulated in the photoelectric conversion unit in a state where the charge accumulated in the photoelectric conversion unit can overflow to the lateral overflow integration capacitor, and a virtual light-shielding accumulation period in which charge based on a dark current is accumulated in the lateral overflow integration capacitor in a state where the charge photoelectrically converted by the photoelectric conversion unit is not accumulated in the lateral overflow integration capacitor may be further included. This brings about an effect that a normal image generated on the basis of photoelectric conversion and a virtual light-shielded image caused by dark current are generated without shielding the photoelectric conversion unit.

Furthermore, in the first aspect, each of the normal accumulation period and the virtual light-shielding accumulation period may include a timing of reading the charge accumulated in the photoelectric conversion unit as a single unit, and a timing of collectively reading the charge accumulated in the photoelectric conversion unit and the charge accumulated in the lateral overflow integration capacitor. This brings about an effect that an image having different conversion efficiency is generated according to the light amount of each pixel.

Furthermore, in the first aspect, each of the normal accumulation period and the virtual light-shielding accumulation period may include a timing of reading the charge accumulated in the photoelectric conversion unit with a different conversion efficiency. This brings about an effect that images having different conversion efficiency of each pixel are generated.

Furthermore, in the first aspect, the normal accumulation period and the virtual light-shielding accumulation period may be set in the same frame. This brings about an effect of generating an image in which the noise component caused by the dark current is reduced while suppressing reduction of the frame rate.

Furthermore, in the first aspect, the normal accumulation period and the virtual light-shielding accumulation period may be set in separate frames. This brings about an effect of generating a virtual light-shielded image including a noise component equivalent to the noise component caused by the dark current included in the normal image.

Furthermore, in the first aspect, the signal processing unit may perform correction processing of the pixel signal on one normal image generated on the basis of charge accumulated in the normal accumulation period by using one virtual light-shielded image generated on the basis of charge accumulated in the virtual light-shielding accumulation period. This brings about an effect of generating the virtual light-shielded image including the noise component corresponding to the fluctuation of the noise component caused by the dark current included in the normal image.

Furthermore, in the first aspect, the signal processing unit may perform correction processing of the pixel signal on a plurality of normal images generated on the basis of charge accumulated in mutually different normal accumulation periods by using one virtual light-shielded image generated on the basis of charge accumulated in the virtual light-shielding accumulation period. This brings about an effect that the normal image in which the noise component caused by the dark current is reduced is generated while suppressing reduction of the frame rate at the time of generating the virtual light-shielded image.

Furthermore, in the first aspect, the signal processing unit may perform correction processing of the pixel signal on one normal image generated on the basis of charge accumulated in the normal accumulation period by using a plurality of virtual light-shielded images generated on the basis of charge accumulated in mutually different virtual light-shielding accumulation periods. This brings about an effect that the normal image in which the noise component caused by the dark current is reduced is generated while averaging the noise component at the time of generating the virtual light-shielded image.

Furthermore, in the first aspect, the signal processing unit my perform analog to digital (AD) conversion of a signal level on the basis of reset levels different from each other for each of a normal image generated on the basis of charge accumulated in the normal accumulation period and a virtual light-shielded image generated on the basis of charge accumulated in the virtual light-shielding accumulation period. This brings about an effect of generating a normal image in which a noise component caused by dark current is reduced.

Furthermore, in the first aspect, the signal processing unit may perform AD conversion of a signal level on the basis of the same reset level for each of a normal image generated on the basis of charge accumulated in the normal accumulation period and a virtual light-shielded image generated on the basis of charge accumulated in the virtual light-shielding accumulation period. This brings about an effect of reducing random noise based on correlated double sampling (CDS) and generating a normal image in which a noise component caused by dark current is reduced.

Furthermore, in the first aspect, a power supply voltage applied to the lateral overflow integration capacitor during the virtual light-shielding accumulation period may be made higher than a power supply voltage applied to the lateral overflow integration capacitor during the normal accumulation period. This brings about an effect that the generation of the virtual light-shielded image including the noise component equivalent to the noise component caused by the dark current included in the normal image is accelerated.

Furthermore, in the first aspect, the pixel may include: a photodiode used as the photoelectric conversion unit; a transfer transistor that transfers charge accumulated in the photodiode to a floating diffusion; a pass transistor that sets a path through which the charge accumulated in the lateral overflow integration capacitor is transferred to the floating diffusion; a reset transistor that resets the floating diffusion; an amplification transistor that outputs a signal according to a potential of the floating diffusion; and a selection transistor that selects an output of the amplification transistor. This brings about an effect that it is possible to collectively read out the charge accumulated in the photodiode and the charge accumulated in the lateral overflow integration capacitor separately from single reading of the charge accumulated in the photodiode.

Furthermore, in the first aspect, the pixel may further include a switching transistor that switches conversion efficiency in the amplification transistor. This brings about an effect of widening a dynamic range.

Furthermore, in the first aspect, when the charge photoelectrically converted by the photoelectric conversion unit is not accumulated in the lateral overflow integration capacitor, the pass transistor may be turned off, and the transfer transistor, the reset transistor, and the switching transistor may be turned on. This brings about an effect that the charge photoelectrically converted by the photoelectric conversion unit is prevented from overflowing to the lateral overflow integration capacitor, and the charge caused by the dark current is accumulated in the lateral overflow integration capacitor.

Furthermore, in the first aspect, in the virtual light-shielding accumulation period, the transfer transistor may be turned off at a timing when the charge accumulated in the photoelectric conversion unit is read as a single unit. This brings about an effect that reading of the charge accumulated in the photoelectric conversion unit in the virtual light-shielding accumulation period is prevented.

Furthermore, in the first aspect, an overflow control transistor that controls overflow of charge from the photoelectric conversion unit to the lateral overflow integration capacitor may be further included. This brings about an effect that the overflow of the charge from the photoelectric conversion unit to the lateral overflow integration capacitor is controlled on the basis of the voltage applied to the overflow control transistor.

Furthermore, in the first aspect, the transfer transistor may be ternary driven among a level at which overflow from the photoelectric conversion unit to the floating diffusion is enabled, a level at which overflow from the photoelectric conversion unit to the floating diffusion is disabled, and a level at which charge is transferred from the photoelectric conversion unit to the floating diffusion. This brings about an effect that the overflow of the charge from the photoelectric conversion unit to the lateral overflow integration capacitor is controlled on the basis of the voltage applied to the transfer transistor.

Furthermore, in the first aspect, the signal processing unit may determine whether or not to perform correction processing of the pixel signal on the basis of a temperature around the pixel. This brings about an effect that when the noise component caused by the dark current is small, the load related to the correction of the noise component is reduced.

### BRIEF DESCRIPTION OF DRAWINGS

Fig. 1 is a block diagram illustrating a configuration example of a camera to which an imaging device according to a first embodiment is applied.
Fig. 2 is a block diagram illustrating a configuration example of a solid-state imaging device according to the first embodiment.
Fig. 3 is a block diagram illustrating a circuit configuration example of a pixel provided in the solid-state imaging device according to the first embodiment.
Fig. 4 is a diagram illustrating an example of a charge discharge path during a virtual light-shielding accumulation period of the solid-state imaging device according to the first embodiment.
Fig. 5 is a diagram illustrating a relationship between an accumulation time and a dark current when a power supply voltage of a lateral overflow integration capacitor according to the first embodiment is changed.
Fig. 6 is a diagram illustrating an example of the potential in an exposure period and a read period during normal accumulation of the solid-state imaging device according to the first embodiment.
Fig. 7 is a diagram illustrating an example of the potential in an exposure period and a read period during virtual light-shielding accumulation of the solid-state imaging device according to the first embodiment.
Fig. 8 is a timing chart illustrating an example of a read operation at the time of normal accumulation of the solid-state imaging device according to the first embodiment.
Fig. 9 is a timing chart illustrating an example of a read operation at the time of virtual light-shielding accumulation of the solid-state imaging device according to the first embodiment.
Fig. 10 is a block diagram illustrating a circuit configuration example of a pixel provided in a solid-state imaging device according to a second embodiment.
Fig. 11 is a block diagram illustrating a circuit configuration example of a pixel provided in a solid-state imaging device according to a third embodiment.
Fig. 12 is a block diagram illustrating a circuit configuration example of a pixel provided in a solid-state imaging device according to a fourth embodiment.
Fig. 13 is a block diagram illustrating a circuit configuration example of a pixel provided in a solid-state imaging device according to a fifth embodiment.
Fig. 14 is a timing chart illustrating a relationship between a normal accumulation period and a virtual light-shielding accumulation period, and correction processing of a solid-state imaging device according to a sixth embodiment.
Fig. 15 is a timing chart illustrating a relationship between a normal accumulation period and a virtual light-shielding accumulation period, and correction processing of a solid-state imaging device according to a seventh embodiment.
Fig. 16 is a timing chart illustrating a relationship between a normal accumulation period and a virtual light-shielding accumulation period, and correction processing of a solid-state imaging device according to an eighth embodiment.
Fig. 17 is a timing chart illustrating a relationship between a normal accumulation period and a virtual light-shielding accumulation period, and correction processing of a solid-state imaging device according to a ninth embodiment.
Fig. 18 is a timing chart illustrating a relationship between a normal accumulation period and a virtual light-shielding accumulation period, and correction processing of a solid-state imaging device according to a tenth embodiment.
Fig. 19 is a timing chart illustrating a relationship between a normal accumulation period and a virtual light-shielding accumulation period, and correction processing of a solid-state imaging device according to an eleventh embodiment.
Fig. 20 is a flowchart illustrating correction processing of a solid-state imaging device according to a twelfth embodiment.
Fig. 21 is a flowchart illustrating correction processing of a solid-state imaging device according to a thirteenth embodiment.
Fig. 22 is a block diagram illustrating a configuration example of a solid-state imaging device according to a fourteenth embodiment.
Fig. 23 is a block diagram illustrating a circuit configuration example of a pixel provided in a solid-state imaging device according to a fifteenth embodiment.
Fig. 24 is a diagram illustrating an example of the potential at the time of normal accumulation and virtual light-shielding accumulation of the solid-state imaging device according to the fifteenth embodiment.
Fig. 25 is a timing chart illustrating the potential of a transfer signal during a normal accumulation period and a virtual light-shielding accumulation period of the solid-state imaging device according to the fifteenth embodiment.
Fig. 26 is a timing chart illustrating a relationship between a normal accumulation period and a virtual light-shielding accumulation period, and a transfer signal of the solid-state imaging device according to the fifteenth embodiment.
Fig. 27 is a block diagram illustrating a circuit configuration example of a pixel provided in a solid-state imaging device according to a sixteenth embodiment.
Fig. 28 is a timing chart illustrating a relationship between a normal accumulation period and a virtual light-shielding accumulation period, and a transfer signal of a solid-state imaging device according to a seventeenth embodiment.
Fig. 29 is a diagram illustrating an example of the potential at the time of normal accumulation and virtual light-shielding accumulation of a solid-state imaging device according to an eighteenth embodiment.
Fig. 30 is a block diagram illustrating a schematic configuration example of a vehicle control system.
Fig. 31 is an explanatory diagram illustrating an example of an installation position of an imaging section.

### MODE FOR CARRYING OUT THE INVENTION

Hereinafter, modes for carrying out the present technology (hereinafter referred to as embodiments) will be described. The description will be given in the following order.
1. First embodiment (an example in which correction processing of a pixel signal read from a pixel is performed on the basis of a virtual light-shielding signal read from a lateral overflow integration capacitor in a state where charge photoelectrically converted by a photodiode is not accumulated in the lateral overflow integration capacitor)
2. Second embodiment (an example in which an overflow control transistor is removed from the pixel)
3. Third embodiment (an example in which a switching transistor is removed from the pixel)
4. Fourth embodiment (an example in which an overflow control transistor and a switching transistor are removed from the pixel)
5. Fifth embodiment (an example in which photodiodes having different sizes are provided in the pixel)
6. Sixth embodiment (an example in which pixel signal correction processing is performed using one virtual light-shielded image for one normal image of mutually different frames)
7. Seventh embodiment (an example in which pixel signal correction processing is performed on one normal image using one virtual light-shielded image of the same frame)
8. Eighth embodiment (an example in which pixel signal correction processing is performed using one virtual light-shielded image for one normal image of mutually different frames)
9. Ninth embodiment (an example in which one normal image and one virtual light-shielded image in the same frame are acquired, and pixel signal correction processing is performed using one virtual light-shielded image on a plurality of normal images in different frames)
10. Tenth embodiment (an example in which pixel signal correction processing is performed using one virtual light-shielded image in which dark current generation is accelerated for one normal image of the same frame)
11. Eleventh embodiment (an example in which one normal image and one virtual light-shielded image in the same frame are acquired, and pixel signal correction processing is performed using a plurality of virtual light-shielded images on one normal image in mutually different frames)
12. Twelfth embodiment (an example of determining whether or not to perform correction processing of a pixel signal on the basis of the temperature around the pixel)
13. Thirteenth embodiment (an example of determining whether or not to perform correction processing using virtual light-shielded images acquired in previous frames on the basis of a temperature change in the periphery of the pixel)
14. Fourteenth embodiment (an example of providing a frame memory for performing CDS in generation of a virtual light-shielded image)
15. Fifteenth embodiment (an example in which a transfer signal is ternarized to generate a virtual light-shielded image)
16. Sixteenth embodiment (an example of adding an overflow control transistor to the pixel in which the transfer signal is ternarized)
17. Seventeenth embodiment (an example of changing the read frequency at the time of virtual light-shielding accumulation of a solid-state imaging device)
18. Eighteenth embodiment (an example of changing a substrate potential to generate a virtual light-shielded image)

### <1. First embodiment>

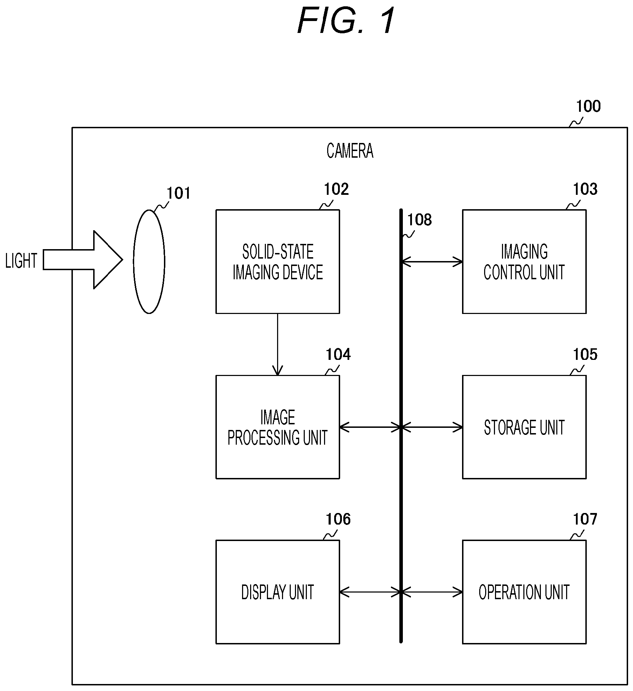

Fig. 1 is a block diagram illustrating a configuration example of a camera to which an imaging device according to a first embodiment is applied.

In Fig. 1, a camera 100 includes an optical system 101, a solid-state imaging device 102, an imaging control unit 103, an image processing unit 104, a storage unit 105, a display unit 106, and an operation unit 107. The imaging control unit 103, the image processing unit 104, the storage unit 105, the display unit 106, and the operation unit 107 are connected to each other via a bus 108. Note that the camera 100 may be used alone, may be incorporated in a portable terminal such as a smartphone, or may be incorporated in an authentication device or a monitoring device.

The optical system 101 causes light from a subject to enter the solid-state imaging device 102, and forms an image of the subject on a light-receiving surface of the solid-state imaging device 102. The optical system 101 can include, for example, a focus lens, a zoom lens, a diaphragm, and the like. The optical system 101 may include a plurality of lenses such as a wide-angle lens, a standard lens, and a telephoto lens.

The solid-state imaging device 102 converts light from the subject into an electric signal for each pixel, and digitizes and outputs the electric signal. The solid-state imaging device 102 may be, for example, a complementary metal oxide semiconductor (CMOS) image sensor or a charge coupled device (CCD).

The imaging control unit 103 controls the imaging by the solid-state imaging device 102 on the basis of a command from the operation unit 107. At this time, the imaging control unit 103 can control the exposure time, the exposure amount, the imaging timing, and the like of the solid-state imaging device 102.

The image processing unit 104 performs image processing on the basis of the output from the solid-state imaging device 102. The image processing is, for example, gamma correction, white balance processing, sharpness processing, or gradation conversion processing. The image processing unit 104 may include a processor that executes processing on the basis of software.

The storage unit 105 stores a captured image captured by the solid-state imaging device 102, and stores imaging parameters and the like of the solid-state imaging device 102. Furthermore, the storage unit 105 can store a program for operating the camera 100 on the basis of software. The storage unit 105 may include a read only memory (ROM), a random access memory (RAM), and a memory card.

The display unit 106 displays a captured image and displays various types of information supporting the imaging operation. The display unit 106 may be a liquid crystal display or an organic electro luminescence (EL) display.

The operation unit 107 provides a user interface for operating the camera 100. The operation unit 107 may include, for example, a button, a dial, and a switch provided in the camera 100. The operation unit 107 may include a touch panel configured together with the display unit 106.

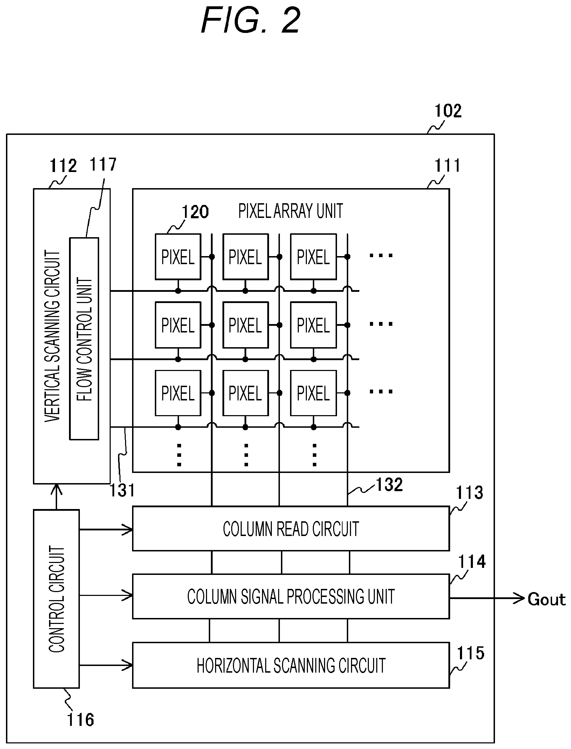

Fig. 2 is a block diagram illustrating a circuit configuration example of the solid-state imaging device according to the first embodiment.

In Fig. 2, the solid-state imaging device 102 includes a pixel array unit 111, a vertical scanning circuit 112, a column read circuit 113, a column signal processing unit 114, a horizontal scanning circuit 115, and a control circuit 116. The vertical scanning circuit 112 includes a flow control unit 117.

The pixel array unit 111 includes a plurality of pixels 120. The pixels 120 are arranged in a matrix along a row direction (also referred to as a horizontal direction) and a column direction (also referred to as a vertical direction). Each pixel 120 includes a lateral overflow integration capacitor that accumulates electric charge overflowing from a photoelectric conversion unit. Each pixel 120 can form a source follower with the column read circuit 113 at the time of signal readout. Each pixel 120 is connected to a horizontal drive line 131 for each row, and is connected to a vertical signal line 132 for each column. When reading a signal from each pixel 120, the horizontal drive line 131 drives the pixels 120 for each row. The vertical signal line 132 transmits potentials corresponding to currents flowing at the time of signal reading from the pixels 120 to the column signal processing unit 114 for each column.

The vertical scanning circuit 112 scans the pixels 120 to be read in the column direction. The vertical scanning circuit 112 may be configured using a vertical register.

The flow control unit 117 discharges the charge so that the charge photoelectrically converted by the photoelectric conversion unit of each pixel 120 is not accumulated in the lateral overflow integration capacitor. At this time, the flow control unit 117 may set a charge discharge path on the basis of on/off of the pixel transistor provided in each pixel 120. Alternatively, the flow control unit 117 may set a charge discharge path on the basis of control of a gate potential of a transfer transistor that transfers the charge from the photoelectric conversion unit to a floating diffusion. Alternatively, the flow control unit 117 may set a charge discharge path on the basis of control of a substrate potential of a semiconductor substrate on which the photoelectric conversion unit is formed.

The column read circuit 113 can form a source follower with each pixel 120 at the time of reading a signal from each pixel 120. At this time, the column read circuit 113 can change the potential of the vertical signal line 132 on the basis of the charge held in the pixel 120. The column read circuit 113 may also support constant current readout or may support capacitive load readout.

The column signal processing unit 114 processes a signal transmitted from each pixel 120 in the column direction. For example, the column signal processing unit 114 can perform correlated double sampling (CDS) processing on the basis of the signal transmitted in the column direction from each pixel 120. Furthermore, the column signal processing unit 114 can perform analog to digital (AD) conversion processing on the basis of the signal transmitted in the column direction from each pixel 120 to output an imaging signal Gout. Further, the column signal processing unit 114 can perform correction processing of a pixel signal read from a pixel on the basis of a virtual light-shielding signal read from the lateral overflow integration capacitor. The virtual light-shielding signal is a signal read from the lateral overflow integration capacitor in a state where the charge photoelectrically converted by the photoelectric conversion unit is not accumulated in the lateral overflow integration capacitor. At this time, the virtual light-shielding signal can include a signal based on charge generated due to dark current. Here, the column signal processing unit 114 can reduce the noise component caused by the dark current by subtracting the virtual light-shielding signal from the pixel signal read from the pixel. Note that the column signal processing unit 114 is an example of a signal processing unit described in the claims.

The horizontal scanning circuit 115 scans the pixels 120 to be read in the row direction. The horizontal scanning circuit 115 may include a horizontal register.

The control circuit 116 controls the vertical scanning circuit 112, the column read circuit 113, the column signal processing unit 114, and the horizontal scanning circuit 115. For example, the control circuit 116 can control the scanning timing in the column direction, the scanning timing in the row direction, the operation timing of the column read circuit 113, and the processing timing of the column signal processing unit 114.

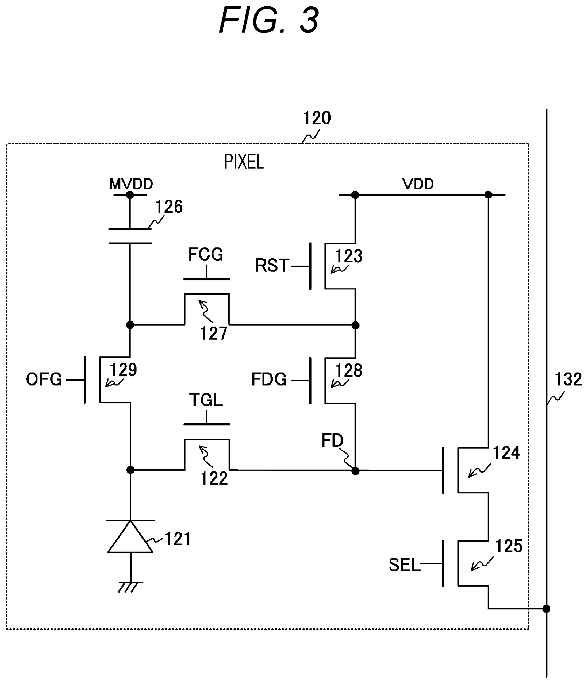

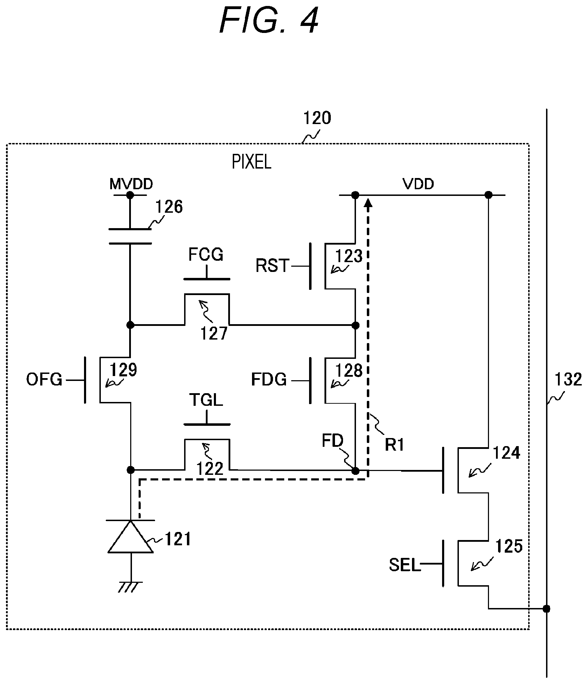

Fig. 3 is a block diagram illustrating a circuit configuration example of a pixel provided in the solid-state imaging device according to the first embodiment, and Fig. 4 is a diagram illustrating an example of a charge discharge path in a virtual light-shielding accumulation period of the solid-state imaging device according to the first embodiment.

In Fig. 3, the pixel 120 includes a photodiode 121, a transfer transistor 122, a reset transistor 123, an amplification transistor 124, a selection transistor 125, and a floating diffusion FD. Further, the pixel 120 includes a lateral overflow integration capacitor 126, a pass transistor 127, a switching transistor 128, and an overflow control transistor 129. The transfer transistor 122, the reset transistor 123, the amplification transistor 124, the selection transistor 125, the pass transistor 127, the switching transistor 128, and the overflow control transistor 129 may be metal oxide semiconductor (MOS) transistors. The lateral overflow integration capacitor 126 may be a metal insulation metal (MIM) capacitor or a junction capacitor formed on a semiconductor substrate.

The photodiode 121 performs photoelectric conversion and accumulates the photoelectrically converted charge. Note that the photodiode 121 is an example of a photoelectric conversion unit described in the claims. The lateral overflow integration capacitor 126 accumulates the charge overflowing from the photodiode 121. The lateral overflow integration capacitor 126 is shielded from light.

The transfer transistor 122 transfers the charge accumulated in the photodiode 121 to the floating diffusion FD. The reset transistor 123 resets the floating diffusion FD. The amplification transistor 124 outputs a signal according to the potential of the floating diffusion FD. The selection transistor 125 selects the output of the amplification transistor 124. The pass transistor 127 sets a path through which the charge accumulated in the lateral overflow integration capacitor 126 is transferred to the floating diffusion FD. The switching transistor 128 switches the conversion efficiency in the amplification transistor 124. The overflow control transistor 129 controls overflow of charge from the photodiode 121 to the lateral overflow integration capacitor 126.

The amplification transistor 124 and the selection transistor 125 are connected in series. A cathode of the photodiode 121 is connected to the floating diffusion FD via the transfer transistor 122. In addition, the floating diffusion FD is connected to a power supply voltage VDD via the switching transistor 128 and the reset transistor 123 sequentially. Furthermore, the power supply voltage VDD is connected to the vertical signal line 132 via a series circuit of the amplification transistor 124 and the selection transistor 125. The gate of the amplification transistor 124 is connected to the floating diffusion FD. The source of the selection transistor 125 is connected to the vertical signal line 132.

The overflow control transistor 129 is connected between the photodiode 121 and the lateral overflow integration capacitor 126. A power supply voltage MVDD is applied to the lateral overflow integration capacitor 126. The power supply voltage MVDD may be higher than the power supply voltage VDD. The pass transistor 127 is connected between a connection point of the lateral overflow integration capacitor 126 and the overflow control transistor 129 and a connection point of the switching transistor 128 and the reset transistor 123.

A transfer signal TGL is applied to the gate of the transfer transistor 122. A reset signal RST is applied to the gate of the reset transistor 123. A selection signal SEL is applied to the gate of the selection transistor 125. A pass setting signal FCG is applied to the gate of the pass transistor 127. A switching signal FDG is applied to the gate of the switching transistor 128. An overflow control signal OFG is applied to the gate of the overflow control transistor 129. The transfer signal TGL, the reset signal RST, the selection signal SEL, the pass setting signal FCG, the switching signal FDG, and the overflow control signal OFG can be transmitted to each pixel 120 via the horizontal drive line 131 in Fig. 2.

The pixel 120 can perform normal reading and virtual light-shielding reading. In normal reading, single reading from the photodiode 121 and collective reading from the photodiode 121 and the lateral overflow integration capacitor 126 are performed. In virtual light-shielding reading, collective reading from the photodiode 121 and the lateral overflow integration capacitor 126 is performed, and single reading from the photodiode 121 is not performed. At this time, in normal reading, the charge accumulated in a state where the charge can overflow from the photodiode 121 to the lateral overflow integration capacitor 126 is read. In virtual light-shielding reading, the charge accumulated in a state where the charge does not flow from the photodiode 121 into the lateral overflow integration capacitor 126 is read. Here, the lateral overflow integration capacitor 126 can accumulate charge generated on the basis of the dark current. At this time, as illustrated in Fig. 4, the transfer transistor 122, the switching transistor 128, and the reset transistor 123 may be turned on to set a discharge path R1 of the charge photoelectrically converted by the photodiode 121. As a result, the charge photoelectrically converted by the photodiode 121 can be prevented from being accumulated in the lateral overflow integration capacitor 126.

During normal reading, in single reading (hereinafter referred to as normal single reading) from the photodiode 121, when the transfer transistor 122 is turned on, the charge accumulated in the photodiode 121 is transferred to the floating diffusion FD. Then, when the selection transistor 125 is turned on, the source potential of the amplification transistor 124 changes according to the potential of the floating diffusion FD. Then, the source potential of the amplification transistor 124 is applied to the vertical signal line 132 via the selection transistor 125 and transmitted via the vertical signal line 132.

During normal reading, in collective reading (hereinafter referred to as normal collective reading) from the photodiode 121 and the lateral overflow integration capacitor 126, the transfer transistor 122, the pass transistor 127, and the switching transistor 128 are turned on. At this time, the charge accumulated in the photodiode 121 and the lateral overflow integration capacitor 126 is transferred to the floating diffusion FD. Here, the charge accumulated in the photodiode 121 and the lateral overflow integration capacitor 126 includes a photoelectric conversion component photoelectrically converted by the photodiode 121 and a dark current component accumulated in the lateral overflow integration capacitor 126. Then, when the selection transistor 125 is turned on, the source potential of the amplification transistor 124 changes according to the potential of the floating diffusion FD. Then, the source potential of the amplification transistor 124 is applied to the vertical signal line 132 via the selection transistor 125 and transmitted via the vertical signal line 132.

During virtual light-shielding reading, in collective reading (hereinafter referred to as virtual light-shielding collective reading) from the photodiode 121 and the lateral overflow integration capacitor 126, the transfer transistor 122, the pass transistor 127, and the switching transistor 128 are turned on. At this time, the charge accumulated in the photodiode 121 and the lateral overflow integration capacitor 126 is transferred to the floating diffusion FD. Here, the charge accumulated in the photodiode 121 and the lateral overflow integration capacitor 126 includes the dark current component accumulated in the lateral overflow integration capacitor 126, but does not include the photoelectric conversion component photoelectrically converted by the photodiode 121. Then, when the selection transistor 125 is turned on, the source potential of the amplification transistor 124 changes according to the potential of the floating diffusion FD. Then, the source potential of the amplification transistor 124 is applied to the vertical signal line 132 via the selection transistor 125 and transmitted via the vertical signal line 132.

Here, in normal reading, a normal accumulation period for accumulating the normally read charge can be set. In virtual light-shielding reading, a virtual light-shielding accumulation period for accumulating the charge read by virtual light-shielding reading can be set separately from the normal accumulation period. The normal accumulation period and the virtual light-shielding accumulation period may be set to the same frame, or may be set to different frames. At this time, when the virtual light-shielding accumulation period is set, the normal accumulation period is reduced. In order to suppress the reduction of the normal accumulation period, it is preferable that the virtual light-shielding accumulation period be short. Since the virtual light-shielding accumulation period is used for accumulation of charge caused by dark current, the virtual light-shielding accumulation period can be shortened by accelerating generation of dark current. In order to accelerate the generation of the dark current, the power supply voltage MVDD applied to the lateral overflow integration capacitor 126 may be increased. Furthermore, the timing for reading the charge accumulated in photodiode 121 may be provided for each of the normal accumulation period and the virtual light-shielding accumulation period with different conversion efficiencies.

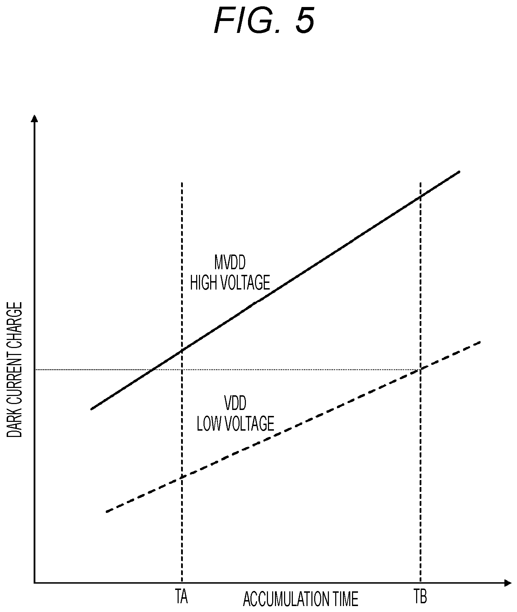

Fig. 5 is a diagram illustrating a relationship between the accumulation time and the dark current when the power supply voltage of the lateral overflow integration capacitor according to the first embodiment is changed.

In Fig. 5, the amount of charge accumulated due to the dark current is proportional to the accumulation time. In a case where the MVDD voltage is high, the charge amount per unit time accumulated in the lateral overflow integration capacitor 126 due to dark current increases. At this time, by increasing the MVDD voltage used at the time of light-shielding accumulation with respect to the MVDD voltage used at the time of normal accumulation, a virtual light-shielding accumulation time TA can be set such that the amount of charge accumulated due to the dark current within a normal accumulation time TB is equal to the amount of charge accumulated due to the dark current within the virtual light-shielding accumulation time TA. This makes it possible to make the amount of charge accumulated due to dark current within the virtual light-shielding accumulation time TA equal for both cases with and without acceleration.

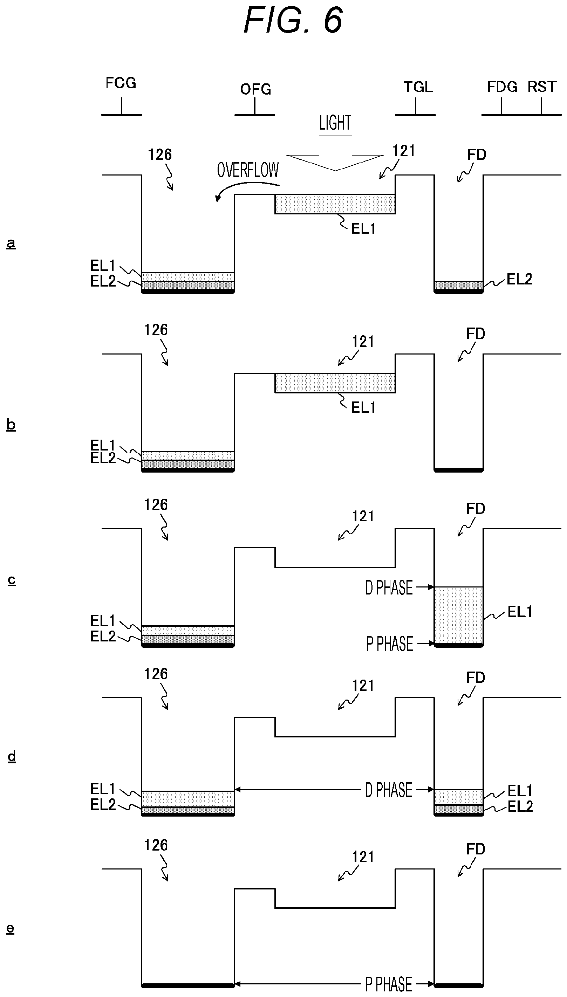

Fig. 6 is a diagram illustrating an example of the potential in an exposure period and a read period during normal accumulation of the solid-state imaging device according to the first embodiment. Note that a of Fig. 6 is a diagram illustrating an example of the potential in the exposure period at the time of normal accumulation. Here, b of Fig. 6 is a diagram illustrating an example of the potential after resetting the floating diffusion FD in the read period at the time of normal accumulation. Here, c of Fig. 6 is a diagram illustrating an example of the potential after single reading from the photodiode 121 in the read period at the time of normal accumulation. Here, d of Fig. 6 is a diagram illustrating an example of the potential at the time of normal collective reading from the photodiode 121 and the lateral overflow integration capacitor 126 in the read period at the time of normal accumulation. Here, e of Fig. 6 is a diagram illustrating an example of the potential after resetting the floating diffusion FD and the lateral overflow integration capacitor 126 in the read period at the time of normal accumulation.

In a of Fig. 6, in the exposure period at the time of normal accumulation, the transfer transistor 122, the pass transistor 127, the switching transistor 128, and the reset transistor 123 are turned off. The gate potential of the overflow control transistor 129 is set such that a charge EL1 accumulated in the photodiode 121 can overflow to the lateral overflow integration capacitor 126. At this time, the charge EL1 photoelectrically converted by the photodiode 121 is accumulated in the photodiode 121, and the charge EL1 overflowing from the photodiode 121 overflows to the lateral overflow integration capacitor 126 and is accumulated in the lateral overflow integration capacitor 126. A charge EL2 generated due to the dark current in the exposure period at the time of normal accumulation is accumulated in the floating diffusion FD and the lateral overflow integration capacitor 126.

In b of Fig. 6, after the reset of the floating diffusion FD in the read period at the time of normal accumulation, the charge EL2 generated and accumulated due to the dark current of the floating diffusion FD is discharged.

In c of Fig. 6, after the single reading from the photodiode 121 in the read period at the time of normal accumulation, the charge EL1 accumulated in the photodiode 121 is transferred to the floating diffusion FD.

In d of Fig. 6, the pass transistor 127 and the switching transistor 128 are turned on at the time of normal collective reading from the photodiode 121 and the lateral overflow integration capacitor 126 in the read period at the time of normal accumulation. At this time, the charge EL1 transferred from the photodiode 121 to the floating diffusion FD, the charge EL1 overflowing from the photodiode 121 to the lateral overflow integration capacitor 126, and the charge EL2 generated and accumulated due to the dark current of the lateral overflow integration capacitor 126 are mixed.

In e of Fig. 6, after the reset of the floating diffusion FD and the lateral overflow integration capacitor 126 in the read period at the time of normal accumulation, the charge EL1 transferred from the photodiode 121 to the floating diffusion FD is discharged. In addition, the charge EL1 overflowing from the photodiode 121 to the lateral overflow integration capacitor 126 and the charge EL2 generated and accumulated due to the dark current of the lateral overflow integration capacitor 126 are also discharged.

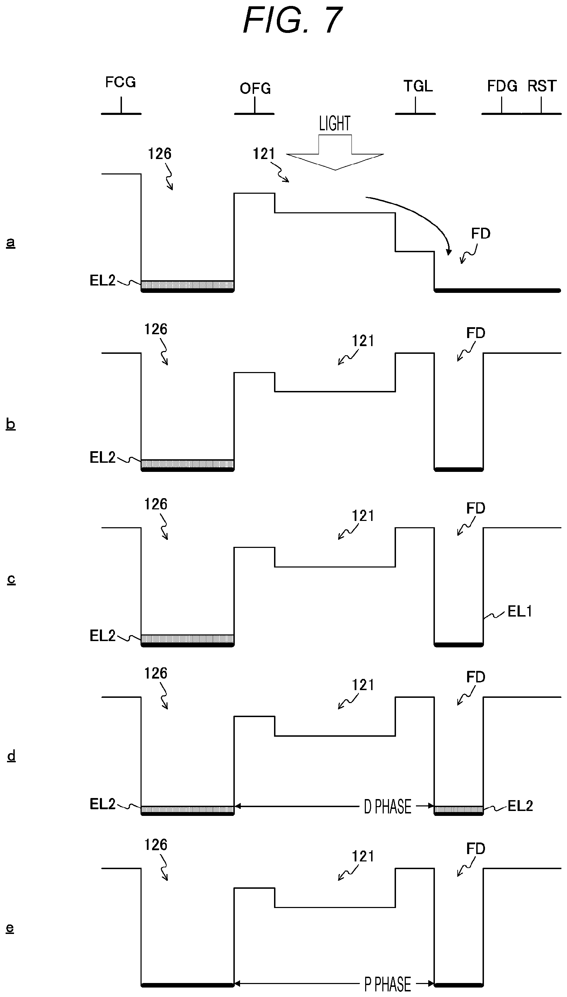

Fig. 7 is a diagram illustrating an example of the potential in an exposure period and a read period during virtual light-shielding accumulation of the solid-state imaging device according to the first embodiment. Note that a of Fig. 7 is a diagram illustrating an example of the potential in the exposure period at the time of virtual light-shielding accumulation. Here, b of Fig. 7 is a diagram illustrating an example of the potential after resetting the floating diffusion FD in the read period at the time of virtual light-shielding accumulation. Here, c of Fig. 7 is a diagram illustrating an example of the potential when the single reading from the photodiode 121 in the read period at the time of virtual light-shielding accumulation is not performed. Here, d of Fig. 7 is a diagram illustrating an example of the potential at the time of virtual light-shielding collective reading from the photodiode 121 and the lateral overflow integration capacitor 126 in the read period at the time of virtual light-shielding accumulation. Here, e of Fig. 7 is a diagram illustrating an example of the potential after resetting the floating diffusion FD and the lateral overflow integration capacitor 126 in the read period at the time of virtual light-shielding accumulation.

In a of Fig. 7, in the exposure period at the time of virtual light-shielding accumulation, the transfer transistor 122, the switching transistor 128, and the reset transistor 123 are turned on, and the discharge path of the charge EL1 photoelectrically converted by the photodiode 121 is set. Therefore, the charge EL1 photoelectrically converted by the photodiode 121 is not accumulated in the photodiode 121, and the charge does not overflow from the photodiode 121 to the lateral overflow integration capacitor 126. At this time, the charge EL2 generated due to the dark current in the exposure period at the time of virtual light-shielding accumulation is accumulated in the lateral overflow integration capacitor 126. Here, the virtual light-shielding accumulation period or the power supply voltage MVDD can be set such that the accumulation amount of the charge EL2 generated due to the dark current in the exposure period at the time of virtual light-shielding accumulation and the accumulation amount of the charge EL2 generated due to the dark current in the exposure period at the time of normal accumulation are equal to each other.

In b of Fig. 7, after the reset of the floating diffusion FD in the read period at the time of virtual light-shielding accumulation, the charge EL2 generated and accumulated due to the dark current of the floating diffusion FD is discharged.

In c of Fig. 7, single reading from the photodiode 121 is not performed in the read period at the time of virtual light-shielding accumulation. At this time, the transfer transistor 122 is turned off so that the charge EL1 accumulated in the photodiode 121 is not transferred to the floating diffusion FD.

In d of Fig. 7, the pass transistor 127 and the switching transistor 128 are turned on at the time of virtual light-shielding collective reading from the photodiode 121 and the lateral overflow integration capacitor 126 in the read period at the time of virtual light-shielding accumulation. At this time, the charge EL2 generated and accumulated due to the dark current of the lateral overflow integration capacitor 126 flows into the floating diffusion FD.

In e of Fig. 7, after the floating diffusion FD and the lateral overflow integration capacitor 126 are reset in the read period at the time of virtual light-shielding accumulation, the charge EL2 generated and accumulated due to the dark current of the lateral overflow integration capacitor 126 is discharged.

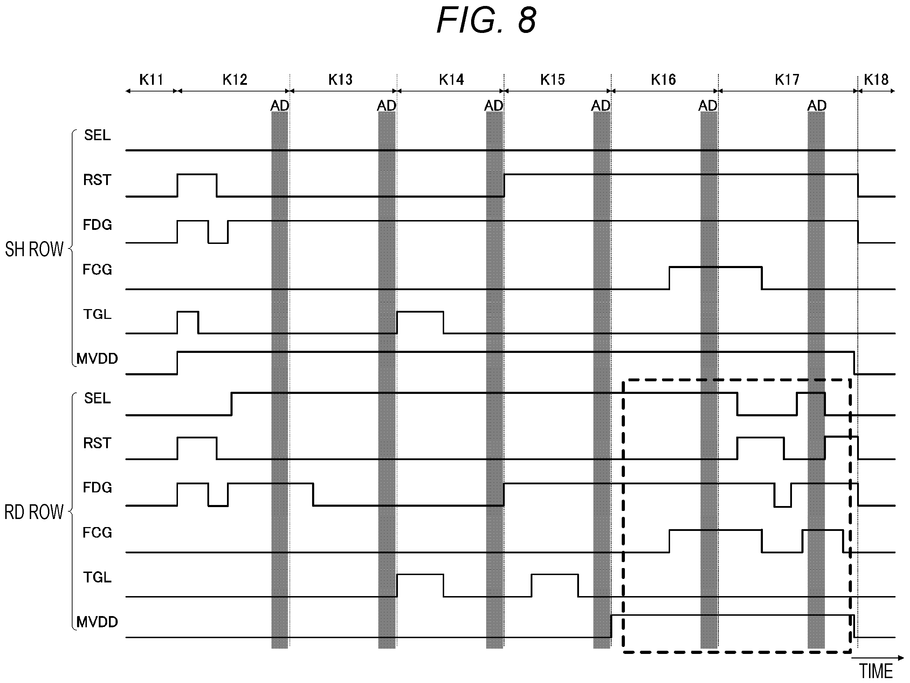

Fig. 8 is a timing chart illustrating an example of a read operation at the time of normal accumulation of the solid-state imaging device according to the first embodiment. Note that an SH row indicates a shutter row, and an RD row indicates a read row. After the SH row is performed, the RD row is performed. At this time, in the SH row, a reference for starting accumulation of the RD row can be set. In addition, Fig. 8 illustrates an example in which CDS reading is performed in normal single reading and double data sampling (DDS) reading is performed in normal collective reading.

In Fig. 8, in the SH row, the selection signal SEL is set to the low level, and the selection transistor 125 is turned off. In a non-selection period K11, the transfer signal TGL, the reset signal RST, the switching signal FDG, and the pass setting signal FCG are maintained at the low level. Then, after the non-selection period K11 elapses, low-efficiency normal P-phase single readout K12 is performed. At this time, the transfer signal TGL, the reset signal RST, and the switching signal FDG rise, the charge of the photodiode 121 and the floating diffusion FD are discharged, and the conversion efficiency in the amplification transistor 124 is reduced. In addition, the power supply voltage MVDD rises and is applied to the lateral overflow integration capacitor 126.

Thereafter, in the low-efficiency normal P-phase single readout K12, after the transfer signal TGL falls, the switching signal FDG falls, and further, the reset signal RST falls. Then, after the switching signal FDG rises again, AD conversion processing is performed. Here, by temporarily lowering the switching signal FDG before the reset signal RST falls, the floating diffusion FD can be coupled to the switching transistor 128. Therefore, the potential of the floating diffusion FD can be boosted, and the charge can be easily transferred from the photodiode 121.

Next, high-efficiency normal P-phase single readout K13 is performed. At this time, the transfer signal TGL, the reset signal RST, the switching signal FDG, and the pass setting signal FCG are subjected to AD conversion processing while maintaining levels similar to those in the low-efficiency normal P-phase readout K12.

Next, high-efficiency normal D-phase single readout K14 is performed. At this time, the transfer signal TGL rises, and the charge of the photodiode 121 is discharged. Then, after the transfer signal TGL falls, AD conversion processing is performed. Here, in the high-efficiency normal D-phase readout K14, the reset signal RST is set to the low level. Therefore, the floating diffusion FD is in a floating state, and the floating diffusion FD can be coupled to the transfer transistor 122. Therefore, the potential of the floating diffusion FD can be boosted, and the charge can be easily extracted from the photodiode 121.

Next, low-efficiency normal D-phase single readout K15 is performed. At this time, the reset signal RST rises, and the charge of the floating diffusion FD is discharged. Then, AD conversion processing is performed while the level of the reset signal RST is maintained.

Next, normal D-phase collective readout K16 is performed. At this time, the pass setting signal FCG rises, and the charge of the lateral overflow integration capacitor 126 is discharged. Then, AD conversion processing is performed while the level of the pass setting signal FCG is maintained.

Next, after normal P-phase collective readout K17 is performed, the processing proceeds to a non-selection period K18. At this time, after the pass setting signal FCG falls, AD conversion processing is performed. Thereafter, the power supply voltage MVDD falls, and further, the reset signal RST and the switching signal FDG fall.

In the RD row, in the non-selection period K11, the selection signal SEL, the transfer signal TGL, the reset signal RST, the switching signal FDG, and the pass setting signal FCG are maintained at the low level. Then, after the non-selection period K11 elapses, low-efficiency normal P-phase single readout K12 is performed. At this time, the reset signal RST and the switching signal FDG rise, the charge of the floating diffusion FD is discharged, and the conversion efficiency in the amplification transistor 124 is reduced.

Thereafter, in the low-efficiency normal P-phase single readout K12, after the switching signal FDG falls, the reset signal RST falls. Then, after the switching signal FDG rises again, the selection signal SEL rises, and AD conversion processing is performed. Here, by temporarily lowering the switching signal FDG before the reset signal RST falls, the floating diffusion FD can be coupled to the switching transistor 128. Therefore, the potential of the floating diffusion FD can be boosted, and the charge can be easily transferred from the photodiode 121.

Next, high-efficiency normal P-phase single readout K13 is performed. At this time, after the switching signal FDG falls and the conversion efficiency in the amplification transistor 124 is increased, AD conversion processing is performed.

Next, high-efficiency normal D-phase single readout K14 is performed. At this time, the transfer signal TGL rises, and the charge of the photodiode 121 is transferred to the floating diffusion FD. Then, after the transfer signal TGL falls, AD conversion processing is performed. Here, in the high-efficiency normal D-phase readout K14, the reset signal RST is set to the low level. Therefore, the floating diffusion FD is in a floating state, and the floating diffusion FD can be coupled to the transfer transistor 122. Therefore, the potential of the floating diffusion FD can be boosted, and the charge can be easily extracted from the photodiode 121.

Next, low-efficiency normal D-phase single readout K15 is performed. At this time, the switching signal FDG rises, and the conversion efficiency in the amplification transistor 124 is reduced. Thereafter, the transfer signal TGL rises, and the charge of the photodiode 121 is transferred to the floating diffusion FD. Then, after the transfer signal TGL falls, AD conversion processing is performed. Here, after the switching signal FDG rises, the transfer signal TGL is raised, so that the capacitance viewed from the amplification transistor 124 can be increased. Therefore, it is possible to increase the charge that can be received from the photodiode 121, and it is possible to easily extract the charge accumulated in the photodiode 121.

Next, normal D-phase collective readout K16 is performed. At this time, the power supply voltage MVDD rises and is applied to the lateral overflow integration capacitor 126. Thereafter, the pass setting signal FCG rises, and the charge of the lateral overflow integration capacitor 126 is transferred to the floating diffusion FD. Then, AD conversion processing is performed while the level of the pass setting signal FCG is maintained.

Next, after normal P-phase collective readout K17 is performed, the processing proceeds to a non-selection period K18. At this time, the reset signal RST rises, and the charge of the lateral overflow integration capacitor 126 is discharged. Here, when the reset signal RST rises, the selection signal SEL falls. Thereafter, the pass setting signal FCG falls, the switching signal FDG falls, the reset signal RST falls, the switching signal FDG rises, the selection signal SEL rises, and the pass setting signal FCG rises. Then, after the pass setting signal FCG rises, AD conversion processing is performed. Thereafter, the pass setting signal FCG falls, the power supply voltage MVDD falls, and the reset signal RST and the switching signal FDG further fall.

Here, the reset level in the normal D-phase collective readout K16 is affected by coupling based on the rise of the selection signal SEL. Therefore, also in the normal P-phase collective readout K17, in order to have an influence of coupling based on the rise of the selection signal SEL, the selection signal SEL is temporarily lowered, and after the reset signal RST falls, the selection signal SEL is raised again. As a result, even in a case where the reset signal RST is temporarily raised in the normal P-phase collective readout K17, the reset level in the normal D-phase collective readout K16 can be aligned with the reset level in the normal P-phase collective readout K17. Furthermore, by temporarily lowering the switching signal FDG before the reset signal RST falls, the floating diffusion FD can be coupled to the switching transistor 128. Therefore, the potential of the floating diffusion FD can be boosted, and the charge can be easily transferred from the photodiode 121 and the lateral overflow integration capacitor 126.

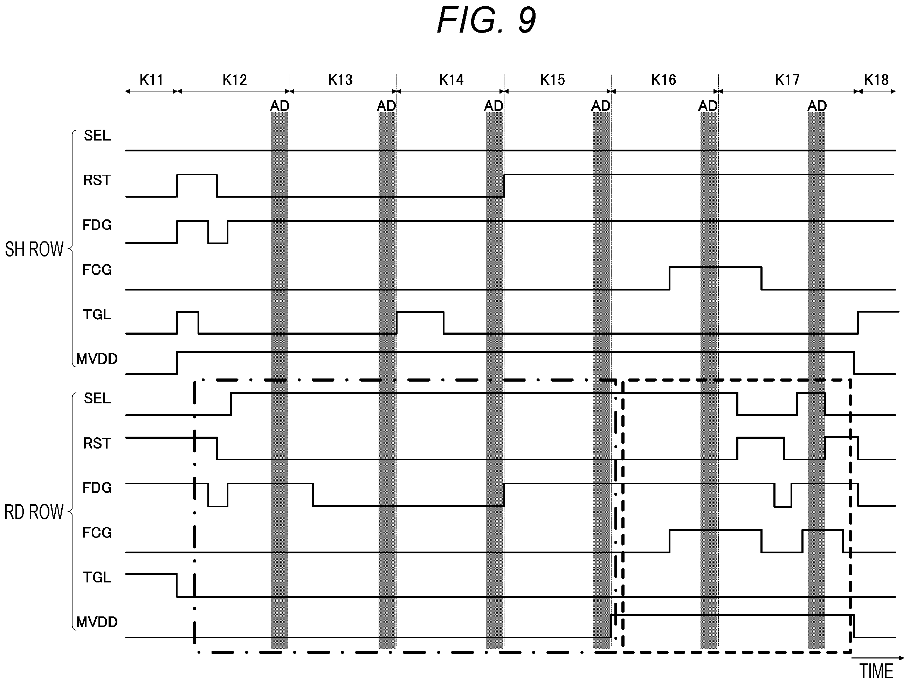

Fig. 9 is a timing chart illustrating an example of a read operation at the time of virtual light-shielding accumulation of the solid-state imaging device according to the first embodiment.

In Fig. 9, the read operation of the SH row at the time of virtual light-shielding accumulation is similar to the read operation of the SH row at the time of normal accumulation except for the non-selection period K18. In the read operation of the SH row at the time of virtual light-shielding accumulation, the transfer signal TGL, the switching signal FDG, and the reset signal RST are set to the high level in the non-selection period K18. Therefore, the transfer transistor 122, the switching transistor 128, and the reset transistor 123 are turned on, and a discharge path of the charge photoelectrically converted by the photodiode 121 is set.

The read operation of the RD row at the time of virtual light-shielding accumulation is similar to the read operation of the RD row at the time of normal accumulation, except for the non-selection period K11, the high-efficiency normal D-phase single readout K14, and the low-efficiency normal D-phase single readout K15. In the read operation of the RD row at the time of virtual light-shielding accumulation, in the non-selection period K11, the transfer signal TGL, the switching signal FDG, and the reset signal RST are set to the high level. Therefore, the transfer transistor 122, the switching transistor 128, and the reset transistor 123 are turned on, and a discharge path of the charge photoelectrically converted by the photodiode 121 is set. In the read operation of the RD row at the time of virtual light-shielding accumulation, the transfer signal TGL is set to the low level in the high-efficiency normal D-phase single readout K14 and the low-efficiency normal D-phase single readout K15. Therefore, the transfer transistor 122 is turned off, and reading of the charge photoelectrically converted by the photodiode 121 is not performed.

Here, in the read operation of the RD row at the time of virtual light-shielding accumulation, the signals in the frame of the alternate long and short dashed lines is not used. Furthermore, the noise component caused by the dark current can be reduced by subtracting the virtual light-shielding signal based on the waveform in the dotted frame of the RD row at the time of virtual light-shielding accumulation from the pixel signal based on the waveform in the dotted frame of the RD row at the time of normal accumulation.

As described above, in the above first embodiment, the discharge path of the charge photoelectrically converted by the photodiode 121 is set so that the charge photoelectrically converted by the photodiode 121 is not accumulated in the lateral overflow integration capacitor 126 at the time of virtual light-shielding accumulation. As a result, the charge caused by the dark current can be accumulated in the lateral overflow integration capacitor 126 without using a mechanical shutter, and the noise component caused by the dark current can be removed from the pixel signal obtained in the normal collective read operation.

### <2. Second embodiment>

In the first embodiment described above, by providing the overflow control transistor 129 in the pixel 120, the charge overflowing from the photodiode 121 to the lateral overflow integration capacitor 126 can be adjusted. In the second embodiment, the overflow control transistor 129 is removed from the pixel 120.

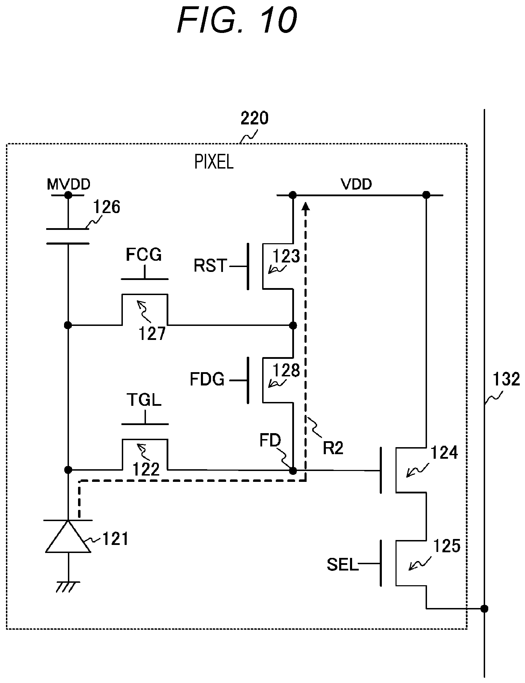

Fig. 10 is a block diagram illustrating a circuit configuration example of a pixel provided in a solid-state imaging device according to the second embodiment.

In Fig. 10, in a pixel 220, the overflow control transistor 129 is removed from the pixel 120 of the first embodiment described above. Other configurations of the pixel 220 of the second embodiment are similar to those of the pixel 120 of the first embodiment described above.

In the pixel 220, a photodiode 121 and a lateral overflow integration capacitor 126 are connected without the overflow control transistor 129 interposed. At this time, a potential barrier can be provided between the photodiode 121 and the lateral overflow integration capacitor 126 so that charge overflowing from the photodiode 121 can overflow to the lateral overflow integration capacitor 126.

Here, in a virtual light-shielding accumulation period, a transfer transistor 122, a switching transistor 128, and a reset transistor 123 may be turned on to set a discharge path R2 of the charge photoelectrically converted by the photodiode 121.

As described above, in the second embodiment described above, the configuration of the pixel 220 can be simplified by removing the overflow control transistor 129 from the pixel 220.

### <3. Third embodiment>

In the second embodiment described above, the overflow control transistor 129 is removed from the pixel 120. In the third embodiment, the switching transistor 128 is removed from the pixel 120.

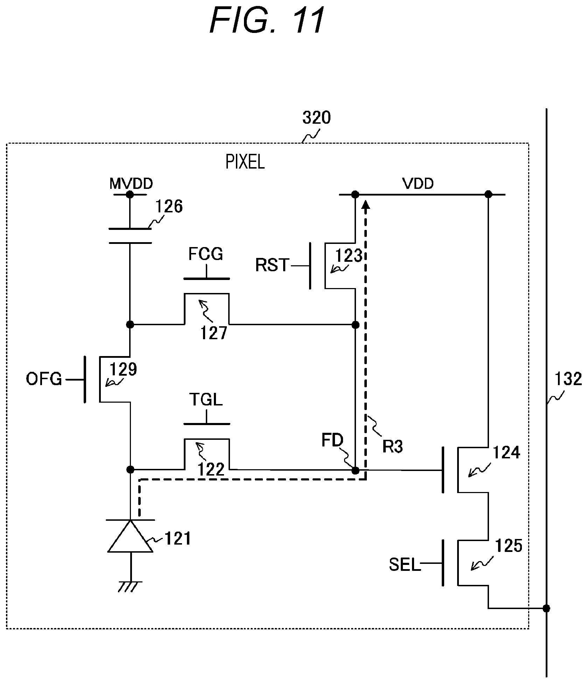

Fig. 11 is a block diagram illustrating a circuit configuration example of a pixel provided in a solid-state imaging device according to the third embodiment.

In Fig. 11, in a pixel 320, the switching transistor 128 is removed from the pixel 120 of the first embodiment described above. Other configurations of the pixel 320 of the third embodiment are similar to those of the pixel 120 of the first embodiment described above.

In the pixel 320, a reset transistor 123 and a pass transistor 127 are connected to a floating diffusion FD without interposing the switching transistor 128. At this time, in the pixel 320, switching of the conversion efficiency based on on/off of the switching transistor 128 is not performed.

Here, in a virtual light-shielding accumulation period, a transfer transistor 122 and the reset transistor 123 may be turned on, and a discharge path R3 of the charge photoelectrically converted by a photodiode 121 may be set.

As described above, in the third embodiment described above, the configuration of the pixel 320 can be simplified by removing the switching transistor 128 from the pixel 320.

### <4. Fourth embodiment>

In the second embodiment described above, the overflow control transistor 129 is removed from the pixel 120. In the fourth embodiment, the overflow control transistor 129 and the switching transistor 128 are removed from the pixel 120.

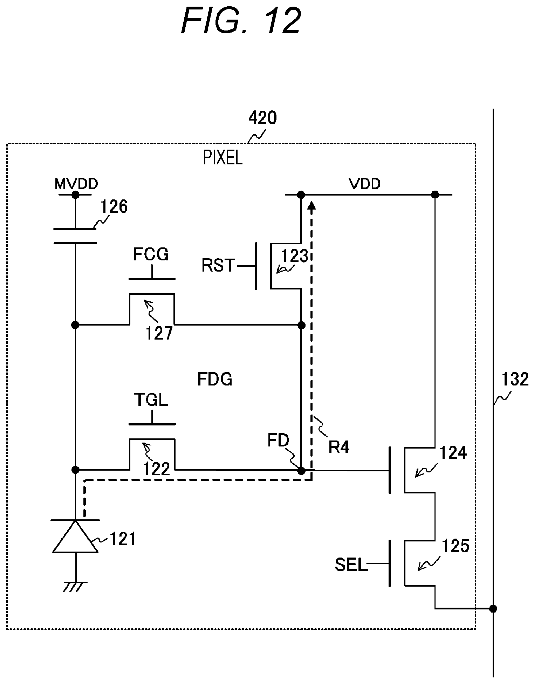

Fig. 12 is a block diagram illustrating a circuit configuration example of a pixel provided in a solid-state imaging device according to the fourth embodiment.

In Fig. 12, in a pixel 420, the overflow control transistor 129 and the switching transistor 128 are removed from the pixel 120 of the first embodiment described above. Other configurations of the pixel 420 of the fourth embodiment are similar to those of the pixel 120 of the first embodiment described above.

In the pixel 420, a photodiode 121 and a lateral overflow integration capacitor 126 are connected without the overflow control transistor 129 interposed. Furthermore, in the pixel 420, a reset transistor 123 and a pass transistor 127 are connected to a floating diffusion FD without interposing the switching transistor 128.

Here, in a virtual light-shielding accumulation period, a transfer transistor 122 and the reset transistor 123 may be turned on, and a discharge path R4 of the charge photoelectrically converted by a photodiode 121 may be set.

As described above, in the fourth embodiment described above, the configuration of the pixel 420 can be simplified by removing the overflow control transistor 129 and the switching transistor 128 from the pixel 420.

### <5. Fifth embodiment>

In the first embodiment described above, one photodiode 121 is provided in the pixel 120. In the fifth embodiment, two photodiodes having different sizes are provided in a pixel.

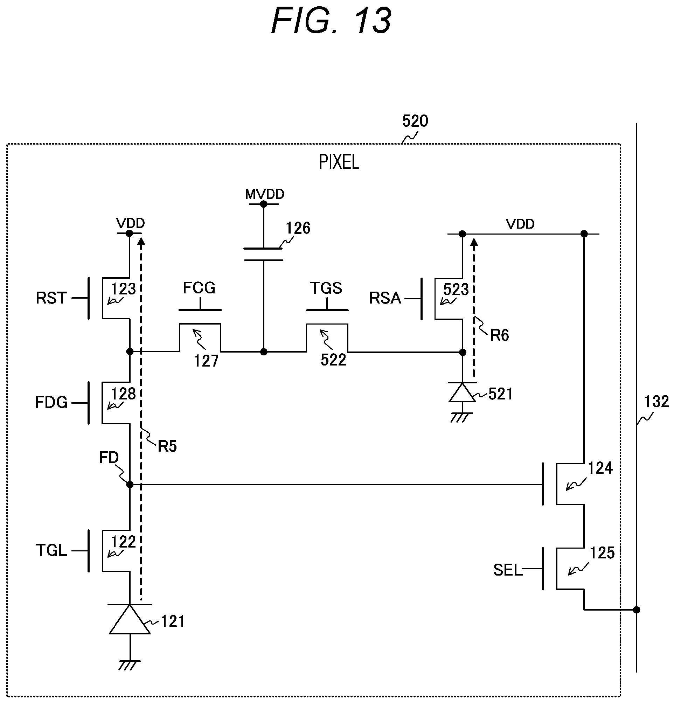

Fig. 13 is a block diagram illustrating a circuit configuration example of a pixel provided in a solid-state imaging device according to the fifth embodiment.

In Fig. 13, in a pixel 520, a photodiode 521, a transfer transistor 522, and a reset transistor 523 are added to the pixel 120 of the first embodiment described above. Furthermore, in the pixel 520, the overflow control transistor 129 is removed from the pixel 120 of the first embodiment described above. Other configurations of the pixel 520 of the fifth embodiment are similar to those of the pixel 120 of the first embodiment described above.

The size of the photodiode 521 can be smaller than the size of the photodiode 121. A cathode of the photodiode 521 is connected to a lateral overflow integration capacitor 126 via the transfer transistor 522. Furthermore, the cathode of the photodiode 521 is connected to a power supply voltage VDD via a reset transistor 123.

Here, in a virtual light-shielding accumulation period, a transfer transistor 122, a switching transistor 128, and the reset transistor 123 may be turned on to set a discharge path R5 of the charge photoelectrically converted by a photodiode 121. Furthermore, in the virtual light-shielding accumulation period, the reset transistor 523 may be turned on, and a discharge path R6 of the charge photoelectrically converted by the photodiode 521 may be set.

As described above, in the above-described fifth embodiment, the dynamic range can be improved by providing the two photodiodes 121 and 521 having different sizes in the pixel 520.

### <6. Sixth embodiment>

In the first embodiment described above, the discharge path of the charge photoelectrically converted by the photodiode 121 is set so that the charge photoelectrically converted by the photodiode 121 is not accumulated in the lateral overflow integration capacitor 126 in the virtual light-shielding accumulation period. In the sixth embodiment, a normal accumulation period and a virtual light-shielding accumulation period are provided in different frames, and a pixel signal obtained from the normal accumulation period in one frame is corrected on the basis of a virtual light-shielding signal obtained from the virtual light-shielding accumulation period in one frame.

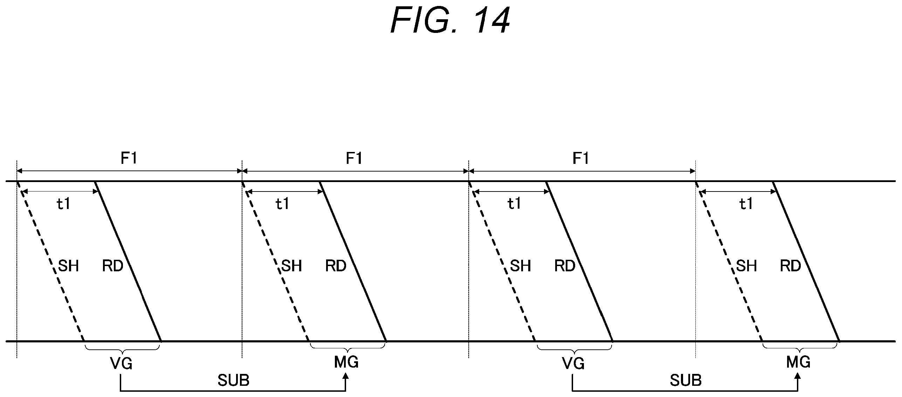

Fig. 14 is a timing chart illustrating a relationship between the normal accumulation period and the virtual light-shielding accumulation period, and the correction processing of the solid-state imaging device according to the sixth embodiment.

In Fig. 14, a solid-state imaging device 102 can alternately set a virtual light-shielding accumulation period VG and a normal accumulation period MG for each frame F1. The frame rate can be set to 30fps, for example. At this time, the interval between shutter SH and reading RD in each of the virtual light-shielding accumulation period VG and the normal accumulation period MG can be set to t1. Then, the solid-state imaging device 102 performs subtraction processing SUB of the virtual light-shielding signal obtained from the virtual light-shielding accumulation period VG of the current frame F1 and the pixel signal obtained from the normal accumulation period MG of the next frame F1.

As described above, in the sixth embodiment described above, the pixel signal obtained from the normal accumulation period MG in one frame is corrected on the basis of the virtual light-shielding signal obtained from the virtual light-shielding accumulation period VG in one frame. At this time, the time interval between the normal accumulation period MG and the virtual light-shielding accumulation period VG in which the signal for performing the subtraction processing SUB is generated can be shortened, and the temperature fluctuation can be suppressed in the normal accumulation period MG and the virtual light-shielding accumulation period VG. Therefore, it is possible to reduce the noise component caused by the dark current included in the normal image while maintaining the temperature fluctuation followability of the noise component caused by the dark current.

### <7. Seventh embodiment>

In the sixth embodiment described above, the normal accumulation period MG and the virtual light-shielding accumulation period VG are provided in different frames F1, and a pixel signal obtained from the normal accumulation period MG in one frame is corrected on the basis of a virtual light-shielding signal obtained from the virtual light-shielding accumulation period VG in one frame. In the seventh embodiment, a normal accumulation period MG and a virtual light-shielding accumulation period VG are provided in the same frame F1, and a pixel signal obtained from the normal accumulation period MG is corrected on the basis of a virtual light-shielding signal obtained from the virtual light-shielding accumulation period VG in the same frame F1.

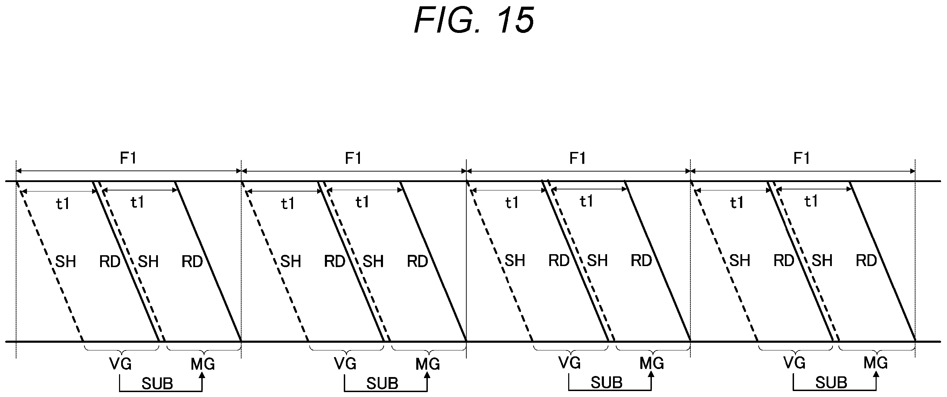

Fig. 15 is a timing chart illustrating a relationship between the normal accumulation period and the virtual light-shielding accumulation period, and the correction processing of a solid-state imaging device according to the seventh embodiment.

In Fig. 15, a solid-state imaging device 102 can set the virtual light-shielding accumulation period VG and the normal accumulation period MG in each frame F1. At this time, the interval between shutter SH and reading RD in each of the virtual light-shielding accumulation period VG and the normal accumulation period MG can be set to t1. Then, the solid-state imaging device 102 performs subtraction processing SUB of the virtual light-shielding signal obtained from the virtual light-shielding accumulation period VG of the current frame F1 and the pixel signal obtained from the normal accumulation period MG of the current frame F1.

As described above, in the seventh embodiment described above, the pixel signal obtained from the normal accumulation period MG is corrected on the basis of the virtual light-shielding signal obtained from the virtual light-shielding accumulation period VG in the same frame F1. As a result, it is possible to reduce the noise component caused by the dark current included in the normal image while maintaining the temperature fluctuation followability of the noise component caused by the dark current, and it is possible to suppress reduction of the frame rate of the normal image.

### <8. Eighth embodiment>

In the sixth embodiment described above, the normal accumulation period MG and the virtual light-shielding accumulation period VG are provided in different frames F1, and a pixel signal obtained from the normal accumulation period MG in one frame is corrected on the basis of a virtual light-shielding signal obtained from the virtual light-shielding accumulation period VG in one frame. In the eighth embodiment, a normal accumulation period MG and a virtual light-shielding accumulation period VG are provided in different frames F1, and pixel signals obtained from the normal accumulation periods MG of a plurality of frames F1 are corrected on the basis of a virtual light-shielding signal obtained from the virtual light-shielding accumulation period VG in one frame.

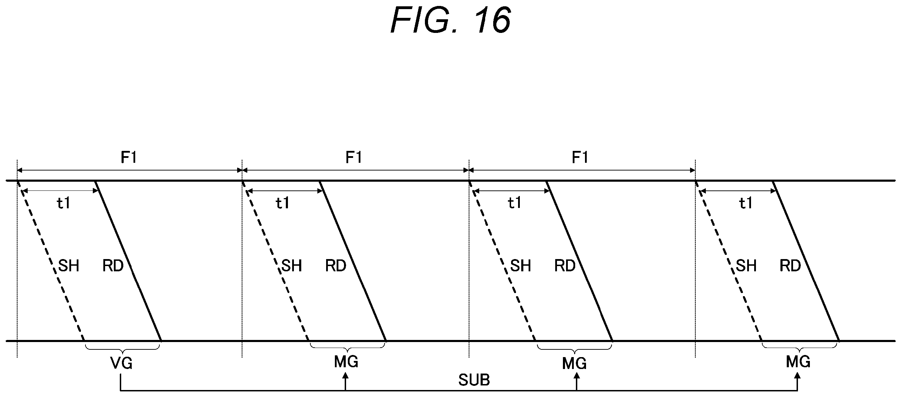

Fig. 16 is a timing chart illustrating a relationship between the normal accumulation period and the virtual light-shielding accumulation period, and the correction processing of a solid-state imaging device according to the eighth embodiment.

In Fig. 16, a solid-state imaging device 102 can set the virtual light-shielding accumulation period VG and the normal accumulation period MG for each frame F1. Here, the solid-state imaging device 102 can allocate a plurality of frames F1 in which the normal accumulation period MG is set to one frame F1 in which the virtual light-shielding accumulation period VG is set. At this time, the interval between shutter SH and reading RD in each of the virtual light-shielding accumulation period VG and the normal accumulation period MG can be set to t1. Then, the solid-state imaging device 102 performs subtraction processing SUB between the virtual light-shielding signal obtained from the virtual light-shielding accumulation period VG of the current frame F1 and the pixel signals obtained from the normal accumulation periods MG of the plurality of subsequent frames F1.

As described above, in the eighth embodiment described above, the pixel signals obtained from the normal accumulation periods MG of the plurality of frames F1 are corrected on the basis of the virtual light-shielding signal obtained from the virtual light-shielding accumulation period VG in one frame. As a result, it is possible to reduce the noise component caused by the dark current included in the normal image while suppressing reduction of the frame rate of the normal image.

### <9. Ninth embodiment>

In the eighth embodiment described above, a normal accumulation period MG and a virtual light-shielding accumulation period VG are provided in different frames F1, and pixel signals obtained from the normal accumulation periods MG of a plurality of frames F1 are corrected on the basis of a virtual light-shielding signal obtained from the virtual light-shielding accumulation period VG in one frame. In the ninth embodiment, a normal accumulation period MG and a virtual light-shielding accumulation period VG are provided in the same frame F1, and pixel signals obtained from the normal accumulation periods MG of a plurality of frames F1 are corrected on the basis of a virtual light-shielding signal obtained from the virtual light-shielding accumulation period VG.

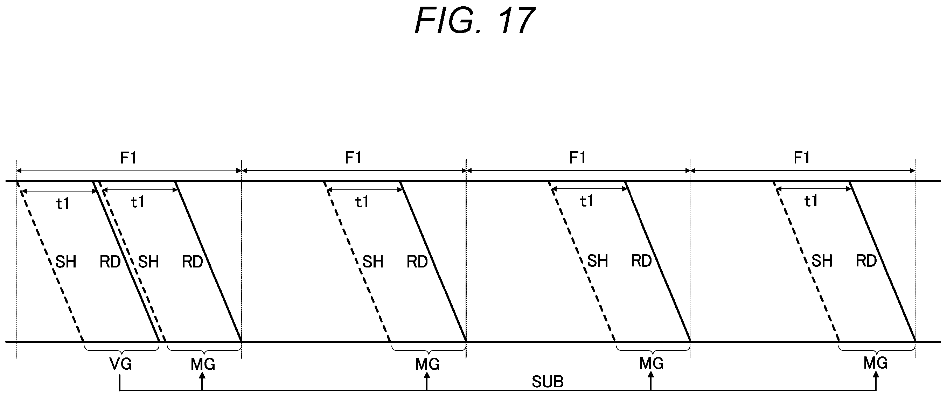

Fig. 17 is a timing chart illustrating a relationship between the normal accumulation period and the virtual light-shielding accumulation period, and the correction processing of a solid-state imaging device according to the ninth embodiment.

In Fig. 17, a solid-state imaging device 102 can set the virtual light-shielding accumulation period VG and the normal accumulation period MG in one frame F1, and can set the normal accumulation period MG in a plurality of frames F1. Here, the solid-state imaging device 102 can allocate a plurality of frames F1 in which the normal accumulation period MG is set to one frame F1 in which the virtual light-shielding accumulation period VG is set. At this time, the interval between shutter SH and reading RD in each of the virtual light-shielding accumulation period VG and the normal accumulation period MG can be set to t1. Then, the solid-state imaging device 102 performs subtraction processing SUB between the virtual light-shielding signal obtained from the virtual light-shielding accumulation period VG of the current frame F1 and the pixel signals obtained from the normal accumulation periods MG of the current frame F1 and a plurality of subsequent frames F1.

As described above, in the ninth embodiment described above, the normal accumulation period MG and the virtual light-shielding accumulation period VG are provided in the same frame F1, and pixel signals obtained from the normal accumulation periods MG of a plurality of frames F1 are corrected on the basis of a virtual light-shielding signal obtained from the virtual light-shielding accumulation period VG. As a result, it is possible to reduce the noise component caused by the dark current included in the normal image while suppressing reduction of the frame rate of the normal image.

### <10. Tenth embodiment>

In the seventh embodiment described above, a normal accumulation period MG and a virtual light-shielding accumulation period VG are provided in the same frame F1, and a pixel signal obtained from the normal accumulation period MG is corrected on the basis of a virtual light-shielding signal obtained from the virtual light-shielding accumulation period VG in the same frame F1. In the tenth embodiment, a normal accumulation period MG and a virtual light-shielding accumulation period VG in which dark current generation is accelerated are provided in the same frame F2, and a pixel signal obtained from the normal accumulation period MG is corrected on the basis of the virtual light-shielding signal obtained from the virtual light-shielding accumulation period VG in the same frame F2.

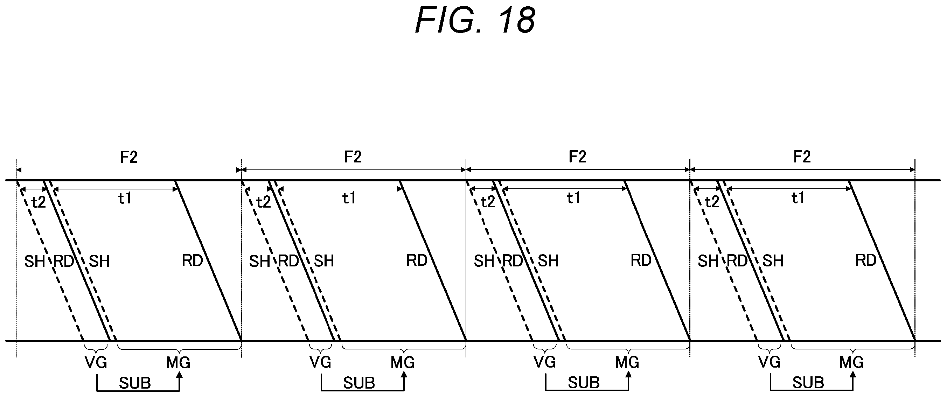

Fig. 18 is a timing chart illustrating a relationship between the normal accumulation period and the virtual light-shielding accumulation period, and the correction processing of a solid-state imaging device according to the tenth embodiment.

In Fig. 18, a solid-state imaging device 102 can set the virtual light-shielding accumulation period VG and the normal accumulation period MG in each frame F2. At this time, in the virtual light-shielding accumulation period VG, as illustrated in Fig. 5, a power supply voltage MVDD can be set such that dark current generation is accelerated. The frame rate can be set to 40fps, for example. At this time, the interval between shutter SH and reading RD in the normal accumulation period MG can be set to t1. The interval between the shutter SH and the reading RD in the virtual light-shielding accumulation period VG can be set to t2. The interval t2 can be shorter than the interval t1. Then, the solid-state imaging device 102 performs subtraction processing SUB of the virtual light-shielding signal obtained from the virtual light-shielding accumulation period VG of the current frame F2 and the pixel signal obtained from the normal accumulation period MG of the current frame F2.

As described above, in the tenth embodiment described above, the normal accumulation period MG and the virtual light-shielding accumulation period VG in which dark current generation is accelerated are provided in the same frame F2. Then, the pixel signal obtained from the normal accumulation period MG is corrected on the basis of the virtual light-shielding signal obtained from the virtual light-shielding accumulation period VG in the same frame F2. As a result, it is possible to reduce the noise component caused by the dark current included in the normal image while maintaining the temperature fluctuation followability of the noise component caused by the dark current, and it is possible to suppress reduction of the frame rate of the normal image.

### <11. Eleventh embodiment>

In the seventh embodiment described above, a normal accumulation period MG and a virtual light-shielding accumulation period VG are provided in the same frame F1, and a pixel signal obtained from the normal accumulation period MG is corrected on the basis of a virtual light-shielding signal obtained from the virtual light-shielding accumulation period VG in the same frame F1. In the eleventh embodiment, a normal accumulation period MG and a virtual light-shielding accumulation period VG are provided in the same frame F1, and pixel signals obtained from the normal accumulation periods MG of a plurality of frames are corrected on the basis of the average value of the virtual light-shielding signal obtained from the virtual light-shielding accumulation periods VG of a plurality of frames.

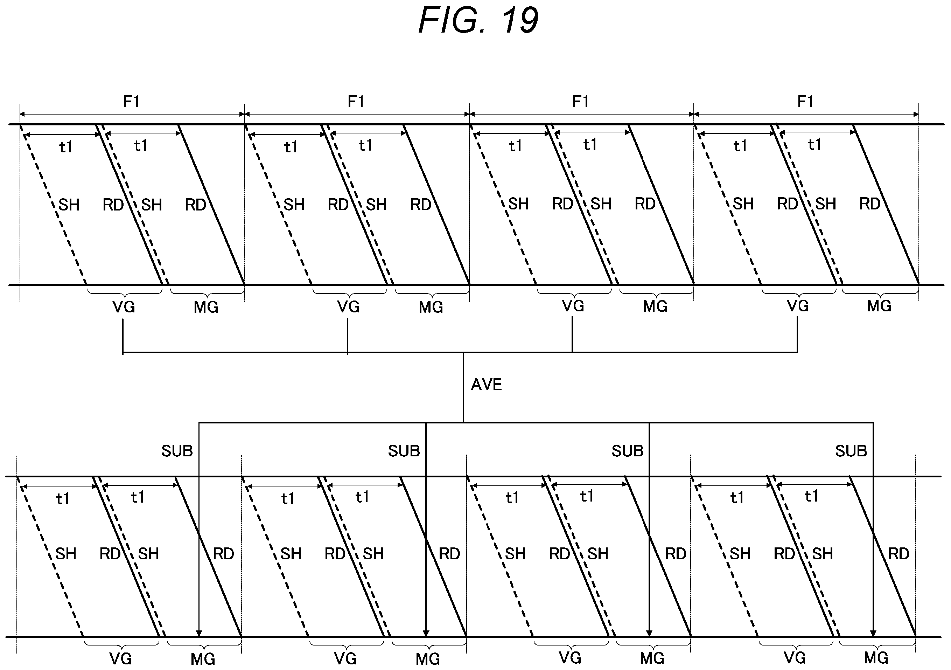

Fig. 19 is a timing chart illustrating a relationship between the normal accumulation period and the virtual light-shielding accumulation period, and the correction processing of a solid-state imaging device according to the eleventh embodiment.

In Fig. 15, a solid-state imaging device 102 can set the virtual light-shielding accumulation period VG and the normal accumulation period MG in each frame F1. At this time, the interval between shutter SH and reading RD in each of the virtual light-shielding accumulation period VG and the normal accumulation period MG can be set to t1. Then, the solid-state imaging device 102 calculates an average value AVE of the virtual light-shielding signals obtained from the virtual light-shielding accumulation periods VG of the plurality of frames F1. Then, subtraction processing SUB is performed between the average value AVE of the virtual light-shielding signals and the pixel signals obtained from the normal accumulation periods MG of the plurality of subsequent frames F1.

As described above, in the eleventh embodiment described above, the normal accumulation period MG and the virtual light-shielding accumulation period VG are provided in the same frame F1. Then, the pixel signal obtained from the normal accumulation periods MG of the plurality of frames are corrected on the basis of the average value AVE of the virtual light-shielding signals obtained from the virtual light-shielding accumulation periods VG of the plurality of frames. As a result, it is possible to reduce the noise component caused by the dark current included in the normal image while reducing the random noise of the normal image, and it is possible to suppress reduction of the frame rate.

### <12. Twelfth embodiment>

In the first embodiment described above, the virtual light-shielding signal for generating the virtual light-shielded image is subtracted from the normal image. In the twelfth embodiment, when the temperature around a solid-state imaging device 102 is higher than a set temperature, a virtual light-shielding signal for generating a virtual light-shielded image is subtracted from a normal image.

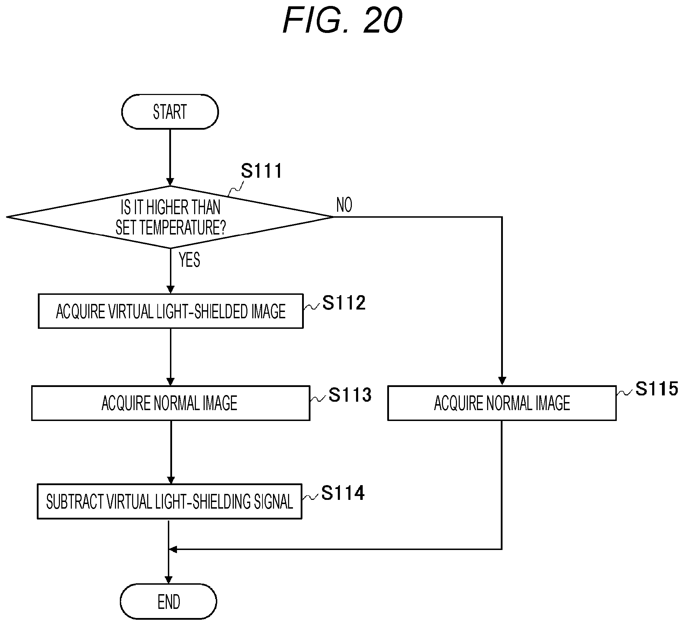

Fig. 20 is a flowchart illustrating correction processing of the solid-state imaging device according to the twelfth embodiment.

In Fig. 20, the solid-state imaging device 102 determines whether the surrounding temperature is higher than a set temperature (S111). In a case where the surrounding temperature is higher than the set temperature, the solid-state imaging device 102 acquires a virtual light-shielded image and a normal image (S112, S113). Then, the solid-state imaging device 102 subtracts a virtual light-shielding signal for generating the virtual light-shielded image from the normal image (S114). On the other hand, in a case where the surrounding temperature is not higher than the set temperature, the solid-state imaging device 102 acquires the normal image (S115).

As described above, in the twelfth embodiment, when the surrounding temperature is higher than a set temperature, the solid-state imaging device 102 subtracts a virtual light-shielding signal for generating a virtual light-shielded image from a normal image. As a result, it is possible to reduce power consumption while suppressing an increase in the noise component caused by the dark current included in the normal image.

### <13. Thirteenth embodiment>

In the twelfth embodiment described above, when the temperature around the solid-state imaging device 102 is higher than a set temperature, a virtual light-shielding signal for generating a virtual light-shielded image is subtracted from a normal image. In the thirteenth embodiment, when there is a predetermined temperature change around a solid-state imaging device 102, a new virtual light-shielded image is acquired, and in a case where there is no predetermined temperature change around the solid-state imaging device 102, the acquired virtual light-shielded image is diverted.

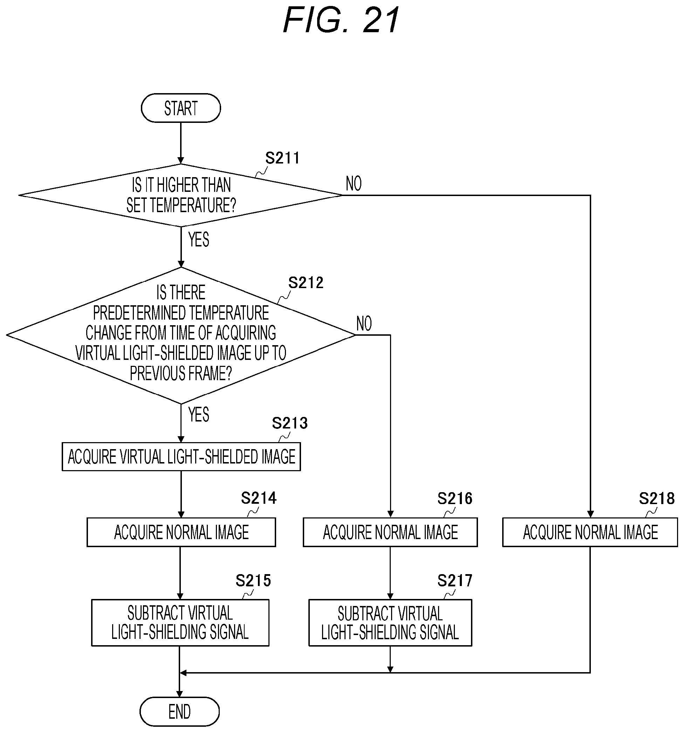

Fig. 21 is a flowchart illustrating correction processing of the solid-state imaging device according to the thirteenth embodiment.

In Fig. 21, the solid-state imaging device 102 determines whether the surrounding temperature is higher than a set temperature (S211). In a case where the surrounding temperature is higher than the set temperature, the solid-state imaging device 102 determines whether or not there is a predetermined temperature change from the time of acquiring the virtual light-shielded image up to the previous frame (S212). In a case where there is a predetermined temperature change from the time of acquiring the virtual light-shielded image up to the previous frame, the solid-state imaging device 102 acquires the virtual light-shielded image and the normal image (S213, S214). Then, the solid-state imaging device 102 subtracts the virtual light-shielding signal for generating the virtual light-shielded image from the normal image (S215).

On the other hand, in a case where there is no predetermined temperature change from the time of acquiring the virtual light-shielded image up to the previous frame, the solid-state imaging device 102 acquires the normal image (S216). Then, the solid-state imaging device 102 subtracts the virtual light-shielding signal for generating the acquired virtual light-shielded image from the normal image (S217). On the other hand, in a case where the surrounding temperature is not higher than the set temperature, the solid-state imaging device 102 acquires a normal image (S218).

As described above, in the thirteenth embodiment described above, when there is a predetermined temperature change around the solid-state imaging device 102, a new virtual light-shielded image is acquired, and in a case where there is no predetermined temperature change around the solid-state imaging device 102, the acquired virtual light-shielded image is diverted. Here, in a case where there is no predetermined temperature change around the solid-state imaging device 102, the fluctuation of the dark current is suppressed, and even if the time difference between the time of acquiring the virtual light-shielded image and the time of acquiring the normal image increases, the difference in the noise component caused by the dark current included in these images is small. Therefore, even in a case where the acquired virtual light-shielded image is diverted when the virtual light-shielding signal is subtracted from the normal image, it is possible to reduce power consumption while suppressing an increase in the noise component caused by the dark current included in the normal image.

### <14. Fourteenth embodiment>

In the first embodiment described above, DDS reading is performed in the normal collective reading and the virtual light-shielding collective reading. In the fourteenth embodiment, a frame memory is provided so as to enable CDS processing also in normal collective reading and virtual light-shielding collective reading.

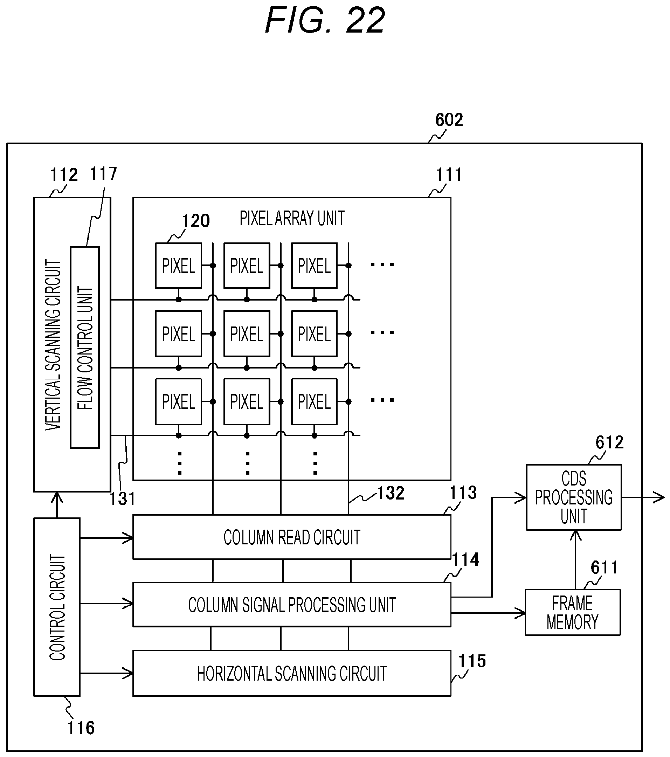

Fig. 22 is a block diagram illustrating a configuration example of a solid-state imaging device according to the fourteenth embodiment.

In Fig. 22, in a solid-state imaging device 602, a frame memory 611 and a CDS processing unit 612 are added to the solid-state imaging device 102 of the first embodiment described above. Other configurations of the solid-state imaging device 602 of the fourteenth embodiment are similar to those of the solid-state imaging device 102 of the first embodiment described above.

The frame memory 611 stores a DDS readout P-phase image. For example, the frame memory 611 can store a normal collective readout P-phase image and a virtual light-shielding collective readout P-phase image for each frame.

The CDS processing unit 612 performs CDS processing on the DDS readout image. For example, the CDS processing unit 612 acquires the normal collective readout D-phase image and the virtual light-shielding collective readout D-phase image from a column read circuit 113 for each frame. In addition, the normal collective readout P-phase image and the virtual light-shielding collective readout P-phase image are read from the frame memory 611 for each frame. Then, subtraction processing of the normal collective readout D-phase image and the normal collective readout P-phase image is performed, and subtraction processing of the virtual light-shielding collective readout D-phase image and the virtual light-shielding collective readout P-phase image is performed.

As described above, in the fourteenth embodiment described above, the frame memory 611 and the CDS processing unit 612 are provided in the solid-state imaging device 602. As a result, even in a case where a signal is DDS-read from each pixel 120, CDS processing can be performed to reduce random noise.

### <15. Fifteenth embodiment>

In the first embodiment described above, in the virtual light-shielding accumulation period, the transfer transistor 122, the switching transistor 128, and the reset transistor 123 are turned on, and the discharge path R1 of the charge photoelectrically converted by the photodiode 121 is set. In the fifteenth embodiment, the gate potential of a transfer transistor 122 is ternarized, and the gate potential of the transfer transistor 122 is set to a low level in a virtual light-shielding accumulation period, thereby setting a discharge path of the charge photoelectrically converted by a photodiode 121.

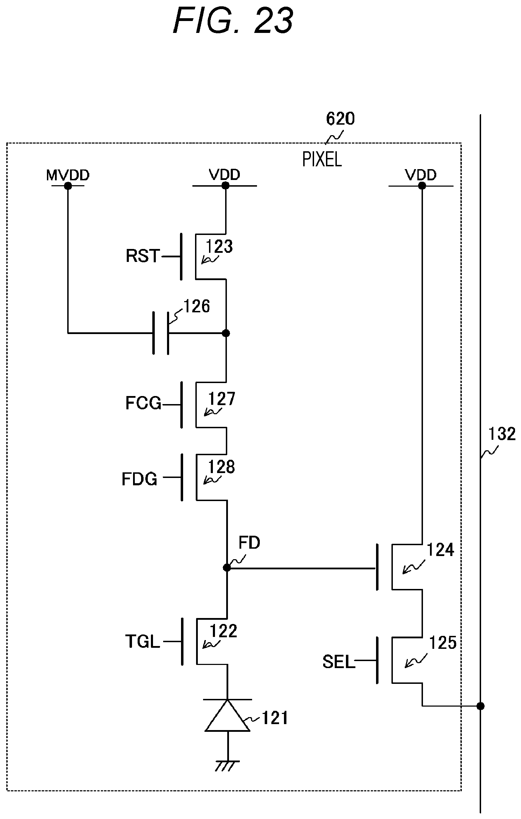

Fig. 23 is a block diagram illustrating a circuit configuration example of a pixel provided in a solid-state imaging device according to the fifteenth embodiment.

In Fig. 23, in a pixel 620, the overflow control transistor 129 is removed from the pixel 120 of the first embodiment described above. Other configurations of the pixel 620 of the fifteenth embodiment are similar to those of the pixel 120 of the first embodiment described above.

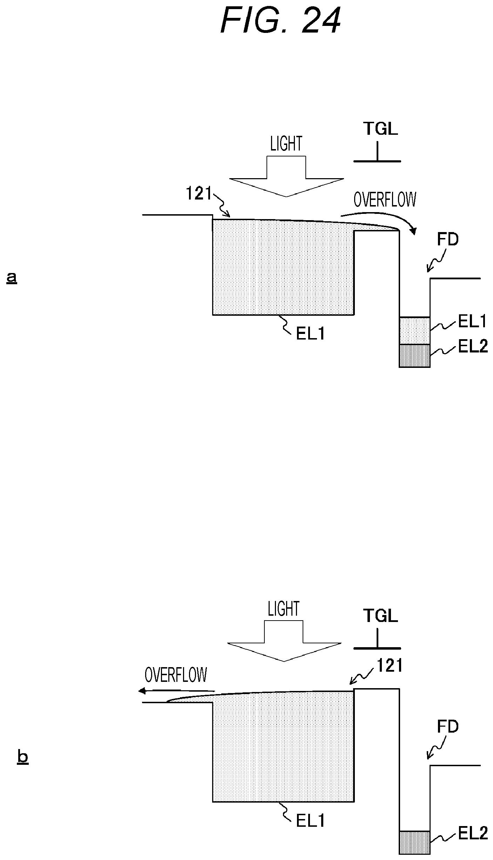

Fig. 24 is a diagram illustrating an example of the potential at the time of normal accumulation and virtual light-shielding accumulation in the solid-state imaging device according to the fifteenth embodiment.

In a of Fig. 24, in a case where charge EL1 accumulated in a photodiode 121 can overflow to a floating diffusion FD, a transfer signal TGL is set to a medium level. At this time, the charge EL1 accumulated in the photodiode 121 can flow into a lateral overflow integration capacitor 126 via the floating diffusion FD.

In b of Fig. 24, in a case where the charge EL1 accumulated in the photodiode 121 is prevented from flowing into the lateral overflow integration capacitor 126, the transfer signal TGL is set to a low level. At this time, the charge EL1 accumulated in the photodiode 121 can be discharged via a path other than the inflow path to the lateral overflow integration capacitor 126.

Note that in a case where the charge EL1 accumulated in the photodiode 121 is read out to the floating diffusion FD, the transfer signal TGL is set to a high level.

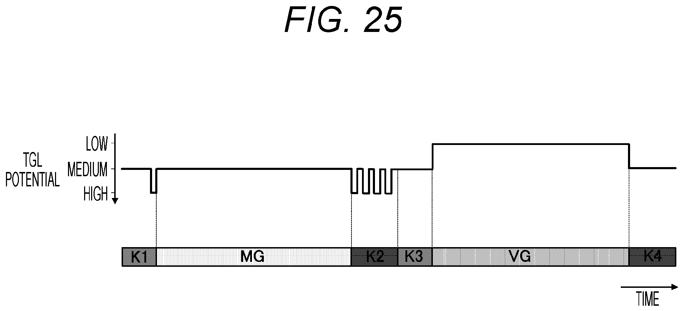

Fig. 25 is a timing chart illustrating the potential of a transfer signal during a normal accumulation period and a virtual light-shielding accumulation period of the solid-state imaging device according to the fifteenth embodiment.

In Fig. 25, the transfer signal TGL is ternary driven. Here, in a normal shutter period K1, the transfer signal TGL rises from the medium level to the high level, and the shutter operation is performed.

Next, in a normal accumulation period MG, the transfer signal TGL falls from the high level to the medium level, and the normal accumulation operation is performed.

Next, in a normal read period K2, the transfer signal TGL is switched between the medium level and the high level, and the normal read operation is performed.

Next, in a virtual light-shielding shutter period K3, the transfer signal TGL is maintained at the medium level, and the shutter operation is performed.

Next, in a virtual light-shielding accumulation period VG, the transfer signal TGL falls from the medium level to the low level, and the virtual light-shielding accumulation operation is performed.

Next, in a virtual light-shielding read period K4, the transfer signal TGL is raised from the low level to the medium level, and the virtual light-shielding read operation is performed.

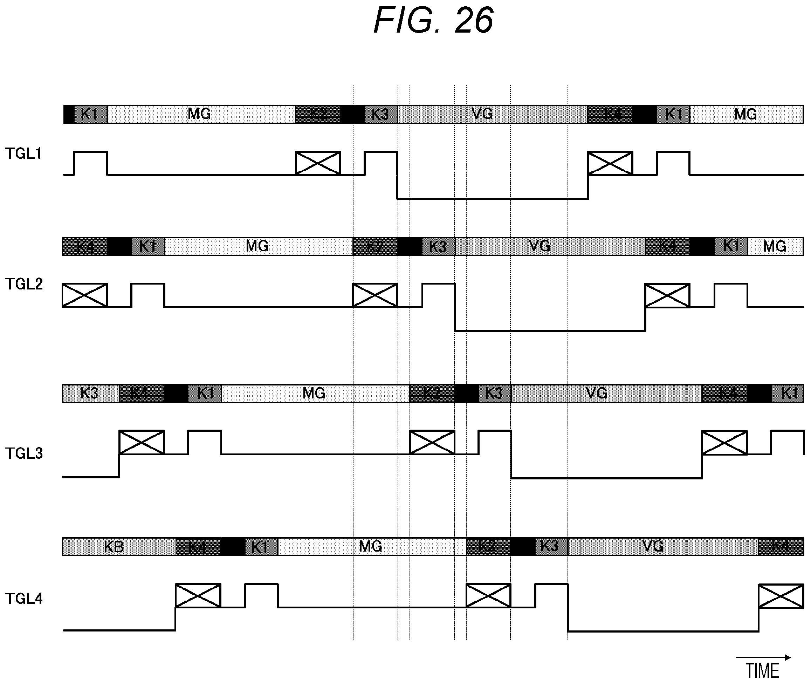

Fig. 26 is a timing chart illustrating a relationship between the normal accumulation period and the virtual light-shielding accumulation period, and the transfer signal of the solid-state imaging device according to the fifteenth embodiment. Note that TGL1 to TGL4 indicate the first to fourth rows of a pixel array unit 111.

In Fig. 26, the normal accumulation period MG and the virtual light-shielding accumulation period VG may be alternately set in each row of the pixel array unit 111. At this time, the normal accumulation period MG and the virtual light-shielding accumulation period VG may be set to the same frame, or may be set to different frames.

As described above, in the fifteenth embodiment described above, the gate potential of the transfer transistor 122 is ternarized, and the gate potential of the transfer transistor 122 is set to a low level in the virtual light-shielding accumulation period VG. As a result, a discharge path of the charge photoelectrically converted by the photodiode 121 can be set so as not to flow into the lateral overflow integration capacitor 126, and the charge caused by the dark current can be accumulated in the lateral overflow integration capacitor 126 in the virtual light-shielding accumulation period VG.

### <16. Sixteenth embodiment>

In the fifteenth embodiment described above, in the virtual light-shielding accumulation period VG, the gate potential of the transfer transistor 122 is set to a low level, and the discharge path of the charge photoelectrically converted by the photodiode 121 is set so as not to flow into the lateral overflow integration capacitor 126. In the sixteenth embodiment, a discharge transistor is provided in a pixel in order to set a discharge path of the charge photoelectrically converted by a photodiode 121 so as not to flow into a lateral overflow integration capacitor 126.

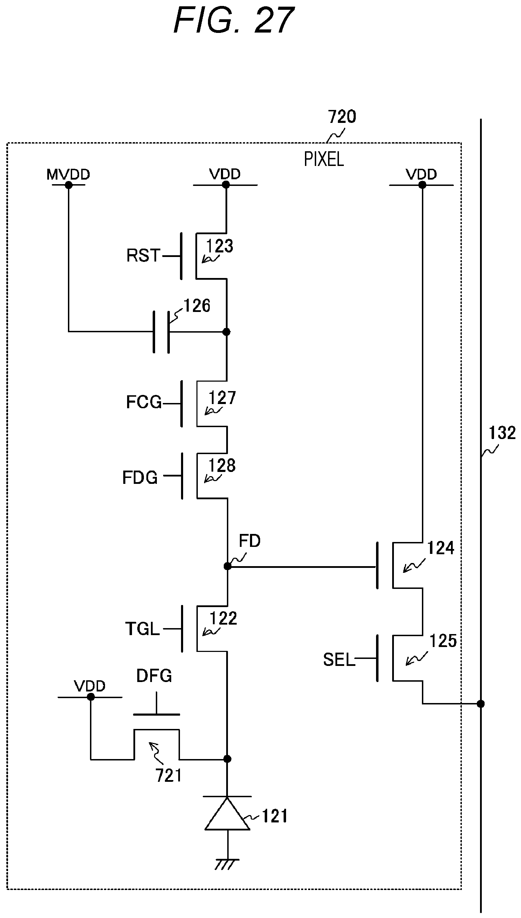

Fig. 27 is a block diagram illustrating a circuit configuration example of a pixel provided in a solid-state imaging device according to the sixteenth embodiment.

In Fig. 27, in a pixel 720, a discharge transistor 721 is added to the pixel 620 of the fifteenth embodiment described above. Other configurations of the pixel 720 of the sixteenth embodiment are similar to those of the pixel 620 of the fifteenth embodiment described above.

The discharge transistor 721 is connected between a cathode of the photodiode 121 and a power supply voltage VDD. The discharge transistor 721 may be a MOS transistor. A discharge signal DFG is applied to the gate of the discharge transistor 721. Then, when a transfer signal TGL is set to a low level, the charges accumulated in the photodiode 121 can be discharged via the discharge transistor 721 so as not to flow into the lateral overflow integration capacitor 126.

In a case where the discharge transistor 721 is provided, the transfer signal TGL may be binary driven in order to set the discharge path of charge EL1 accumulated in the photodiode 121. At this time, by controlling the potential of the discharge signal DFG, the charge photoelectrically converted by the photodiode 121 can be discharged so as not to flow into the lateral overflow integration capacitor 126.

As described above, in the sixteenth embodiment described above, the discharge transistor 721 is connected between the cathode of the photodiode 121 and the power supply voltage VDD. As a result, it is possible to set a discharge path of the charge photoelectrically converted by the photodiode 121 so as not to flow into the lateral overflow integration capacitor 126.

### <17. Seventeenth embodiment>

In the first embodiment described above, the normal accumulation period MG and the virtual light-shielding accumulation period VG are alternately set in each row of the pixel array unit 111. In the seventeenth embodiment, in each row of a pixel array unit 111, a plurality of normal accumulation periods MG is set between virtual light-shielding accumulation periods VG.

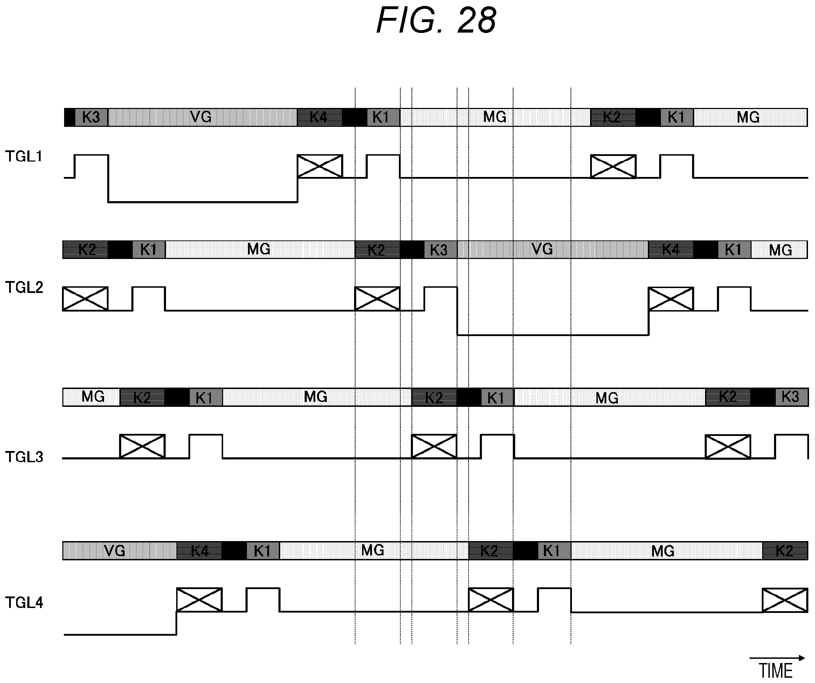

Fig. 28 is a timing chart illustrating a relationship between the normal accumulation period and the virtual light-shielding accumulation period, and a transfer signal of a solid-state imaging device according to the seventeenth embodiment.

In Fig. 28, in each row of the pixel array unit 111, one virtual light-shielding accumulation period VG may be set for a plurality of normal accumulation periods MG. For example, the virtual light-shielding accumulation period VG may be arranged after every two normal accumulation periods MG, or may be arranged after every three normal accumulation periods MG.

As described above, in seventeenth embodiment described above, a plurality of normal accumulation periods MG is set between the virtual light-shielding accumulation periods VG. As a result, it is possible to reduce the noise component caused by the dark current of the normal image while suppressing reduction of the normal accumulation period MG.

### <18. Eighteenth embodiment>

In the fifteenth embodiment described above, in the virtual light-shielding accumulation period VG, the gate potential of the transfer transistor 122 is set to a low level, and the discharge path of the charge photoelectrically converted by the photodiode 121 is set so as not to flow into the lateral overflow integration capacitor 126. In the eighteenth embodiment, a substrate potential is changed in order to set a discharge path of the charge photoelectrically converted by a photodiode 121 so as not to flow into a lateral overflow integration capacitor 126 in a virtual light-shielding accumulation period VG.

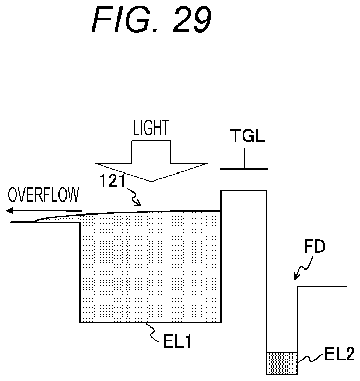

Fig. 29 is a diagram illustrating an example of the potential at the time of normal accumulation and virtual light-shielding accumulation in a solid-state imaging device according to the eighteenth embodiment.

In Fig. 29, in a case where charge EL1 accumulated in the photodiode 121 is prevented from flowing into the lateral overflow integration capacitor 126, a transfer signal TGL is set to a low level, and the substrate potential of the semiconductor substrate on which the photodiode 121 is formed is increased. At this time, the charge EL1 accumulated in the photodiode 121 can be discharged via a path other than the inflow path to the lateral overflow integration capacitor 126.

Here, in a case where the charge EL1 accumulated in the photodiode 121 is discharged on the basis of the substrate potential of the semiconductor substrate on which the photodiode 121 is formed, the pixels are separated into elements for each row, and the substrate potential can be controlled for each row. At this time, full trench isolation (FTI) may be used as the element isolation structure.

As described above, eighteenth embodiment described above, the discharge path of the charge photoelectrically converted by the photodiode 121 is set by changing the substrate potential. As a result, in the virtual light-shielding accumulation period VG, the charge caused by the dark current can be accumulated in the lateral overflow integration capacitor 126, and the noise component caused by the dark current of the normal image can be reduced without using a mechanical shutter.

### <15. Application example to mobile body>

The technology according to the present disclosure (present technology) can be applied to various products. For example, the technology of the present disclosure may be implemented as a device mounted on any type of mobile body such as an automobile, an electric vehicle, a hybrid electric vehicle, a motorcycle, a bicycle, a personal mobility, an airplane, a drone, a ship, a robot, and the like.

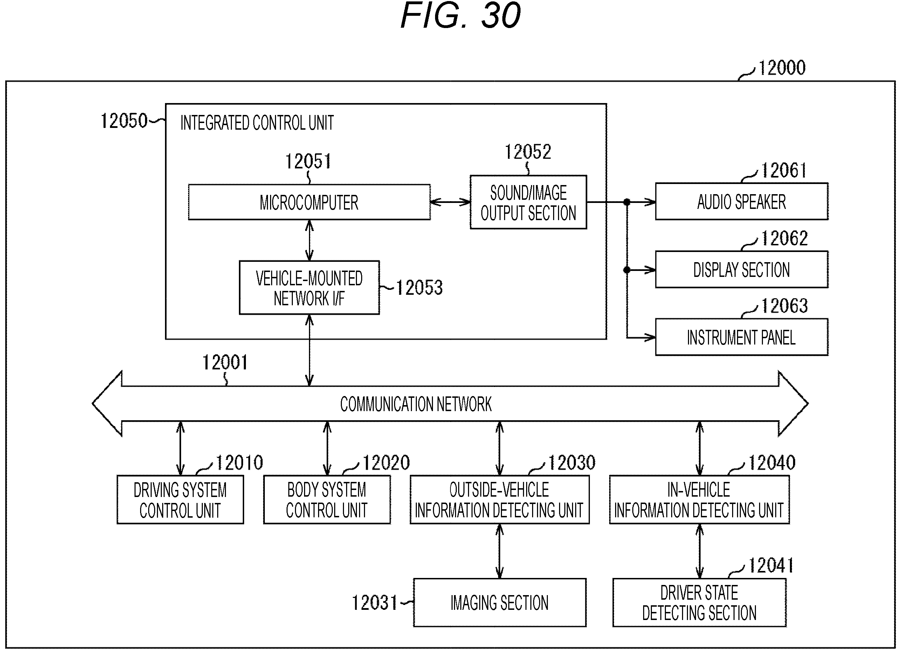

Fig. 30 is a block diagram illustrating a schematic configuration example of a vehicle control system as an example of a mobile object control system to which the technology according to the present disclosure may be applied.

The vehicle control system 12000 includes a plurality of electronic control units connected to each other via a communication network 12001. In the example illustrated in Fig. 30, the vehicle control system 12000 includes a driving system control unit 12010, a body system control unit 12020, an outside-vehicle information detecting unit 12030, an in-vehicle information detecting unit 12040, and an integrated control unit 12050. Furthermore, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

Furthermore, the microcomputer 12051 can output a control command to the body system control unit 12020 on the basis of the information about the outside of the vehicle acquired by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of Fig. 30, an audio speaker 12061, a display section 12062, and an instrument panel 12063 are exemplified as the output device. The display section 12062 may, for example, include at least one of an on-board display and a head-up display.

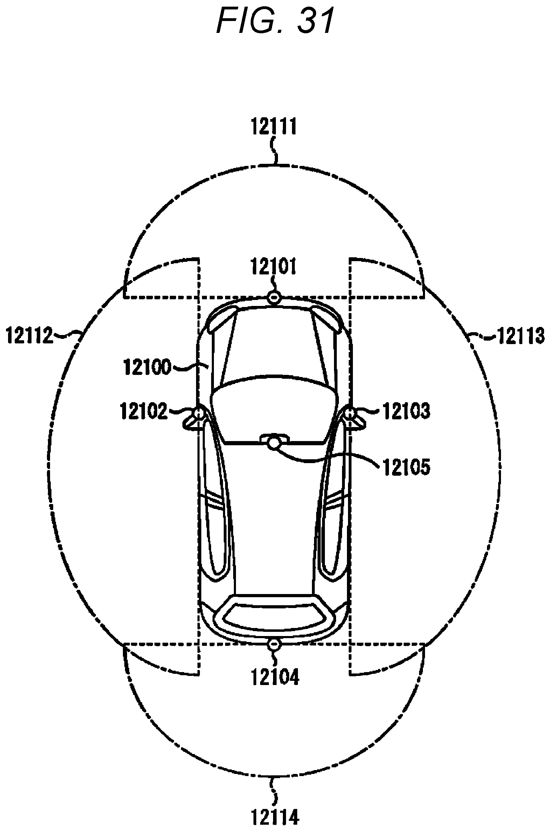

Fig. 31 is a diagram illustrating an example of the installation position of the imaging section 12031.

In Fig. 31, the imaging section 12031 includes imaging sections 12101, 12102, 12103, 12104, and 12105.

The imaging sections 12101, 12102, 12103, 12104, and 12105 are, for example, provided at positions on a front nose, sideview mirrors, a rear bumper, and a back door of a vehicle 12100 as well as a position on an upper portion of a windshield in the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Note that Fig. 31 illustrates an example of the imaging ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

An example of the vehicle control system to which the technology according to the present disclosure can be applied has been described above. The technology of the present disclosure can be applied to the imaging section 12031 among the configurations described above. Specifically, for example, the above-described solid-state imaging devices 102 and 602 can be applied to the imaging section 12031 of the vehicle control system 12000. By applying the technology according to the present disclosure to the vehicle control system 12000, it is possible to obtain a captured image while suppressing the influence of noise.

Note that the embodiments described above illustrate examples for embodying the present technology, and matters in the embodiments and matters specifying the invention in the claims have correspondence relationships. Similarly, the matters specifying the invention in the claims and matters with the same names in the embodiments of the present technology have correspondence relationships. However, the present technology is not limited to the embodiments, and can be embodied by applying various modifications to the embodiments without departing from the gist of the present technology. In addition, effects described in the present specification are merely examples and are not limited, and other effects may be provided.

Note that the present technology may also have the following configurations.
(1) An imaging device including
   a pixel provided with a lateral overflow integration capacitor that accumulates charge overflowing from a photoelectric conversion unit, and
   a signal processing unit that performs correction processing of a pixel signal read from the pixel on the basis of a virtual light-shielding signal read from the lateral overflow integration capacitor in a state where the charge photoelectrically converted by the photoelectric conversion unit is not accumulated in the lateral overflow integration capacitor.
(2) The imaging device according to (1), further including a flow control unit that discharges the charge so that the charge photoelectrically converted by the photoelectric conversion unit is not accumulated in the lateral overflow integration capacitor.
(3) The imaging device according to (1) or (2), further including
   a normal accumulation period in which charge is accumulated in the photoelectric conversion unit in a state where the charge accumulated in the photoelectric conversion unit can overflow to the lateral overflow integration capacitor, and
   a virtual light-shielding accumulation period in which charge based on a dark current is accumulated in the lateral overflow integration capacitor in a state where the charge photoelectrically converted by the photoelectric conversion unit is not accumulated in the lateral overflow integration capacitor.
(4) The imaging device according to (3), in which
   each of the normal accumulation period and the virtual light-shielding accumulation period includes
   a timing of reading the charge accumulated in the photoelectric conversion unit as a single unit, and
   a timing of collectively reading the charge accumulated in the photoelectric conversion unit and the charge accumulated in the lateral overflow integration capacitor.
(5) The imaging device according to (4), in which
   each of the normal accumulation period and the virtual light-shielding accumulation period includes a timing of reading the charge accumulated in the photoelectric conversion unit with a different conversion efficiency.
(6) The imaging device according to (4) or (5), in which
   the normal accumulation period and the virtual light-shielding accumulation period are set in the same frame.
(7) The imaging device according to (4) or (5), in which
   the normal accumulation period and the virtual light-shielding accumulation period are set in separate frames.
(8) The imaging device according to any one of (3) to (7), in which
   the signal processing unit performs correction processing of the pixel signal on one normal image generated on the basis of charge accumulated in the normal accumulation period by using one virtual light-shielded image generated on the basis of charge accumulated in the virtual light-shielding accumulation period.
(9) The imaging device according to any one of (3) to (7), in which
   the signal processing unit performs correction processing of the pixel signal on a plurality of normal images generated on the basis of charge accumulated in mutually different normal accumulation periods by using one virtual light-shielded image generated on the basis of charge accumulated in the virtual light-shielding accumulation period.
(10) The imaging device according to any one of (3) to (7), in which
   the signal processing unit performs correction processing of the pixel signal on one normal image generated on the basis of charge accumulated in the normal accumulation period by using a plurality of virtual light-shielded images generated on the basis of charge accumulated in mutually different virtual light-shielding accumulation periods.
(11) The imaging device according to any one of (3) to (10), in which
   the signal processing unit performs analog to digital (AD) conversion of a signal level on the basis of reset levels different from each other for each of a normal image generated on the basis of charge accumulated in the normal accumulation period and a virtual light-shielded image generated on the basis of charge accumulated in the virtual light-shielding accumulation period.
(12) The imaging device according to any one of (3) to (10), in which
   the signal processing unit performs AD conversion of a signal level on the basis of the same reset level for each of a normal image generated on the basis of charge accumulated in the normal accumulation period and a virtual light-shielded image generated on the basis of charge accumulated in the virtual light-shielding accumulation period.
(13) The imaging device according to any one of (3) to (12), in which
   a power supply voltage applied to the lateral overflow integration capacitor during the virtual light-shielding accumulation period is made higher than a power supply voltage applied to the lateral overflow integration capacitor during the normal accumulation period.
(14) The imaging device according to any one of (3) to (13), in which
   the pixel includes:
   a photodiode used as the photoelectric conversion unit;
   a transfer transistor that transfers charge accumulated in the photodiode to a floating diffusion;
   a pass transistor that sets a path through which the charge accumulated in the lateral overflow integration capacitor is transferred to the floating diffusion;
   a reset transistor that resets the floating diffusion;
   an amplification transistor that outputs a signal according to a potential of the floating diffusion; and
   a selection transistor that selects an output of the amplification transistor.
(15) The imaging device according to (14), in which
   the pixel further includes a switching transistor that switches conversion efficiency in the amplification transistor.
(16) The imaging device according to (14) or (15), in which
   when the charge photoelectrically converted by the photoelectric conversion unit is not accumulated in the lateral overflow integration capacitor, the pass transistor is turned off, and the transfer transistor, the reset transistor, and the switching transistor are turned on.
(17) The imaging device according to any one of (14) to (16), in which
   in the virtual light-shielding accumulation period, the transfer transistor is turned off at a timing when the charge accumulated in the photoelectric conversion unit is read as a single unit.
(18) The imaging device according to any one of (14) to (17), further including
   an overflow control transistor that controls overflow of charge from the photoelectric conversion unit to the lateral overflow integration capacitor.
(19) The imaging device according to any one of (14) to (18), in which
   the transfer transistor is ternary driven among a level at which overflow from the photoelectric conversion unit to the floating diffusion is enabled, a level at which overflow from the photoelectric conversion unit to the floating diffusion is disabled, and a level at which charge is transferred from the photoelectric conversion unit to the floating diffusion.
(20) The imaging device according to any one of (3) to (19), in which
   the signal processing unit determines whether or not to perform correction processing of the pixel signal on the basis of a temperature around the pixel.

### REFERENCE SIGNS LIST

- 100: Camera
- 101: Optical system
- 102: Solid-state imaging device
- 103: Imaging control unit
- 104: Image processing unit
- 105: Storage unit
- 106: Display unit
- 107: Operation unit
- 108: Bus
- 111: Pixel array unit
- 112: Vertical scanning circuit
- 113: Column read circuit
- 114: Column signal processing unit
- 115: Horizontal scanning circuit
- 116: Control circuit
- 117: Flow control unit
- 121: Photodiode
- 122: Transfer transistor
- 123: Reset transistor
- 124: Amplification transistor
- 125: Selection transistor
- 126: Lateral overflow integration capacitor
- 127: Pass transistor
- 128: Switching transistor
- 129: Overflow control transistor
- FD: Floating diffusion
- 131: Horizontal drive unit
- 132: Vertical signal line

## Claims

1. An imaging device comprising:
a pixel provided with a lateral overflow integration capacitor that accumulates charge overflowing from a photoelectric conversion unit; and
a signal processing unit that performs correction processing of a pixel signal read from the pixel on a basis of a virtual light-shielding signal read from the lateral overflow integration capacitor in a state where the charge photoelectrically converted by the photoelectric conversion unit is not accumulated in the lateral overflow integration capacitor.

2. The imaging device according to claim 1, further comprising
a flow control unit that discharges the charge so that the charge photoelectrically converted by the photoelectric conversion unit is not accumulated in the lateral overflow integration capacitor.

3. The imaging device according to claim 1, further comprising:
a normal accumulation period in which charge is accumulated in the photoelectric conversion unit in a state where the charge accumulated in the photoelectric conversion unit can overflow to the lateral overflow integration capacitor; and
a virtual light-shielding accumulation period in which charge based on a dark current is accumulated in the lateral overflow integration capacitor in a state where the charge photoelectrically converted by the photoelectric conversion unit is not accumulated in the lateral overflow integration capacitor.

4. The imaging device according to claim **3,** wherein
each of the normal accumulation period and the virtual light-shielding accumulation period includes
a timing of reading the charge accumulated in the photoelectric conversion unit as a single unit, and
a timing of collectively reading the charge accumulated in the photoelectric conversion unit and the charge accumulated in the lateral overflow integration capacitor.

5. The imaging device according to claim 4, wherein
each of the normal accumulation period and the virtual light-shielding accumulation period includes a timing of reading the charge accumulated in the photoelectric conversion unit with a different conversion efficiency.

6. The imaging device according to claim 4, wherein
the normal accumulation period and the virtual light-shielding accumulation period are set in a same frame.

7. The imaging device according to claim 4, wherein
the normal accumulation period and the virtual light-shielding accumulation period are set in separate frames.

8. The imaging device according to claim **3,** wherein
the signal processing unit performs correction processing of the pixel signal on one normal image generated on a basis of charge accumulated in the normal accumulation period by using one virtual light-shielded image generated on a basis of charge accumulated in the virtual light-shielding accumulation period.

9. The imaging device according to claim 3, wherein
the signal processing unit performs correction processing of the pixel signal on a plurality of normal images generated on a basis of charge accumulated in mutually different normal accumulation periods by using one virtual light-shielded image generated on a basis of charge accumulated in the virtual light-shielding accumulation period.

10. The imaging device according to claim **3,** wherein
the signal processing unit performs correction processing of the pixel signal on one normal image generated on a basis of charge accumulated in the normal accumulation period by using a plurality of virtual light-shielded images generated on a basis of charge accumulated in mutually different virtual light-shielding accumulation periods.

11. The imaging device according to claim **3,** wherein
the signal processing unit performs analog to digital (AD) conversion of a signal level on a basis of reset levels different from each other for each of a normal image generated on a basis of charge accumulated in the normal accumulation period and a virtual light-shielded image generated on a basis of charge accumulated in the virtual light-shielding accumulation period.

12. The imaging device according to claim **3,** wherein
the signal processing unit performs AD conversion of a signal level on a basis of the same reset level for each of a normal image generated on a basis of charge accumulated in the normal accumulation period and a virtual light-shielded image generated on a basis of charge accumulated in the virtual light-shielding accumulation period.

13. The imaging device according to claim **3,** wherein
a power supply voltage applied to the lateral overflow integration capacitor during the virtual light-shielding accumulation period is made higher than a power supply voltage applied to the lateral overflow integration capacitor during the normal accumulation period.

14. The imaging device according to claim 1, wherein
the pixel includes:
a photodiode used as the photoelectric conversion unit;
a transfer transistor that transfers charge accumulated in the photodiode to a floating diffusion;
a pass transistor that sets a path through which the charge accumulated in the lateral overflow integration capacitor is transferred to the floating diffusion;
a reset transistor that resets the floating diffusion;
an amplification transistor that outputs a signal according to a potential of the floating diffusion; and
a selection transistor that selects an output of the amplification transistor.

15. The imaging device according to claim 14, wherein
the pixel further includes a switching transistor that switches conversion efficiency in the amplification transistor.

16. The imaging device according to claim 15, wherein
when the charge photoelectrically converted by the photoelectric conversion unit is not accumulated in the lateral overflow integration capacitor, the pass transistor is turned off, and the transfer transistor, the reset transistor, and the switching transistor are turned on.

17. The imaging device according to claim 15, wherein
in the virtual light-shielding accumulation period, the transfer transistor is turned off at a timing when the charge accumulated in the photoelectric conversion unit is read as a single unit.

18. The imaging device according to claim 15, further comprising
an overflow control transistor that controls overflow of charge from the photoelectric conversion unit to the lateral overflow integration capacitor.

19. The imaging device according to claim 14, wherein
the transfer transistor is ternary driven among a level at which overflow from the photoelectric conversion unit to the floating diffusion is enabled, a level at which overflow from the photoelectric conversion unit to the floating diffusion is disabled, and a level at which charge is transferred from the photoelectric conversion unit to the floating diffusion.

20. The imaging device according to claim 3, wherein
the signal processing unit determines whether or not to perform correction processing of the pixel signal on a basis of a temperature around the pixel.
